(19) Europäisches Patentamt
European Patent Office
Office européen des brevets

(11) EP 2 224 431 A1

(12) EUROPEAN PATENT APPLICATION

(43) Date of publication:
01.09.2010 Bulletin 2010/35

(51) Int Cl.:
G10L 19/02 (2006.01)  G06F 17/14 (2006.01)

(21) Application number: 09153723.3

(22) Date of filing: 26.02.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(71) Applicant: RESEARCH IN MOTION LIMITED
Waterloo, Ontario N2L 3W8 (CA)

(72) Inventors:
• Wu, Guixing
Waterloo Ontario N2L 3Y1 (CA)

• Yang, En-Hui
Waterloo Ontario N2T 2R8 (CA)

(74) Representative: Patel, Binesh
Barker Brettell LLP
10-12 Priests Bridge
London
SW15 5JE (GB)

Remarks:
Amended claims in accordance with Rule 137(2)
EPC.

(54) **Methods and devices for performing a fast modified discrete cosine transform of an input sequence**

(57) An improved fast N-point MDCT process and encoder/decoder is disclosed. The N-point MDCT may be realized through an N/2-point DCT algorithm. The N/2 DCT transform matrix is directly factored and the factored DCT transform matrices are used to develop a set of equations for realizing the N-point MDCT coefficients from an input sequence. The factoring of the DCT transform matrix may include expressing the DCT transform as a multiplication of matrices and exploiting mirror images within the matrices. It may further include simplifying at least one of the matrices by eliminating a variable based on trigonometric identity

150

152
Define DCT of $w_m$ as:
$$Y_k = D \cdot w_m$$

154
Factor $D$ into multiple matrix multiplication, including:
1. Exploit mirror images within the matrices
2. Apply at least one trigonometric identity to remove a variable from one of the matrices

156
Solve resulting factored matrices to generate set of equations

FIG. 3

EP 2 224 431 A1

## Description

### FIELD

The present application relates to methods and systems for performing a fast modified discrete cosine transform of an input sequence and, in particular, to encoders and decoders implementing audio encoding and decoding.

### BACKGROUND

Audio compression/encoding standards often employ a modified discrete cosine transform (MDCT) to obtain spectral coefficients from an input audio sequence. To improve the speed of the compression/encoding process, many have tried to develop fast MDCT processes. For example, some authors have proposed converting an N-point MDCT into N/4-point discrete cosine transform (DCT) and N/4-point discrete sine transform (DST): see V. Britanak and K. R. Rao, "An efficient implementation of the forward and inverse MDCT in MPEG Audio Coding", IEEE Signal Processing Letters, Vol. 8, No. 2, pp. 48-51, Feb. 2001; and V. Britanak and K. R. Rao, "A new fast algorithm for the unified forward and inverse MDCT/MDST computation", Signal Processing Letters, Vol. 82, pp. 433-459, 2002.

In another example, one other has proposed a method in which an N-point MDCT is converted to two identical N/4-point DCTs: S.-W. Lee, "Improved algorithm for efficient computation of the forward and backward MDCT in MPEG audio coder", IEEE Transactions on Circuits and Systems-II: Analog and Digital Signal Processing, Vol. 48, No. 10, pp. 990-994, Oct. 2001.

It would be advantageous to provide an improved process for performing N-point MDCT and its inverse and an encoder and decoder implementing such a process. It would be advantageous to provide an improved MDCT or its inverse that realizes the transform using fewer multiplications and/or additions than existing transform processes.

### BRIEF DESCRIPTION OF THE DRAWINGS

Reference will now be made, by way of example, to the accompanying drawings which show example embodiments of the present application, and in which:

Figure 1 shows an audio encoding process to which example embodiments may be applied;

Figure 2 shows, in flowchart form, an example method of encoding an audio input sample in accordance with the present application;

Figure 3 shows, in flowchart form, an example process for generating the set of equations used in the process shown in Figure 2; and

Figure 4 shows, in block diagram form, an example embodiment of an encoder.

Similar reference numerals may have been used in different figures to denote similar components.

### DESCRIPTION OF EXAMPLE EMBODIMENTS

The present application provides an N-point MDCT process and encoder by directly factoring the N/2 DCT transform matrix, and using the factored DCT transform matrix to develop the set of equations for realizing the N-point MDCT coefficients from an input sequence. The factoring of the DCT transform matrix may include expressing the DCT transform as a multiplication of matrices and exploiting mirror images within the matrices. It may further include simplifying at least one of the matrices by eliminating a variable based on trigonometric identity.

In one aspect, the present application describes a method of encoding an audio signal using a modified discrete cosine transform (MDCT). The method includes receiving the audio signal, the audio signal including an input sequence of length N; calculating a scaled interim sequence as a function of the input sequence; calculating an output sequence of discrete cosine transform (DCT) coefficients by performing an N/2-point DCT of the scaled interim sequence by applying to the scaled interim sequence a set of equations derived by factoring a DCT transform matrix into a multiplication of at least three matrices and performing at least one simplifying operation; calculating the MDCT coefficients of the input sequence from the DCT coefficients; and encoding the MDCT coefficients.

In some embodiments, the factoring of the DCT transform matrix and/or the simplifying operations may rely on mirror images within the matrices and Gaussian elimination. In some embodiments, the factoring and/or simplifying may rely on applying trigonometric identities to eliminate one or more variables from factored matrices. Other mathematical simplifications to reduce or eliminate additions and/or multiplications in the application of the DCT transform may be realized through expressing the DCT transform matrix as a matrix multiplication and further factoring and/or simplifying the matrix expressions.

In another aspect, the present application describes an encoder for applying the set of equations obtained for implementing the fast MDCT to an audio input sequence. The encoder includes a processor and memory storing program instructions to configure the processor to apply the set of equations to an interim sequence derived from the input audio sequence to produce MDCT coefficients. The encoder may further include a quantization and entropy coding module for encoding the MDCT coefficients.

In another aspect, the present application describes a decoder for decoding the encoded MDCT coefficients.

In some embodiments the methods and/or encoder/decoder may be configured for input sequences of length N=12. In some embodiments the methods and/or encoder/decoder may be configured for input sequences of length N=36.

In another aspect, the present application discloses method of encoding an audio signal using a modified discrete cosine transform. The method includes receiving the audio signal, the audio signal including a data sequence; multiplying the data sequence by a windowing sequence to create a windowed data sequence of length N; calculating a scaled interim sequence of length N/2 as a function of the windowed data sequence; performing an N/2-point DCT of the scaled interim sequence to create an output sequence of DCT coefficients; calculating the MDCT coefficients of the data sequence from the DCT coefficients; and encoding the MDCT coefficients. Each element of the scaled interim sequence is a difference between two elements of the data sequence multiplied by an indexed coefficient. The indexed coefficient is incorporated into the window sequence and applied when multiplying the data sequence by the windowing sequence.

In yet another aspect, the present application discloses a computer program product including a computer-readable medium containing program instructions for configuring a computer processor to implement the above method.

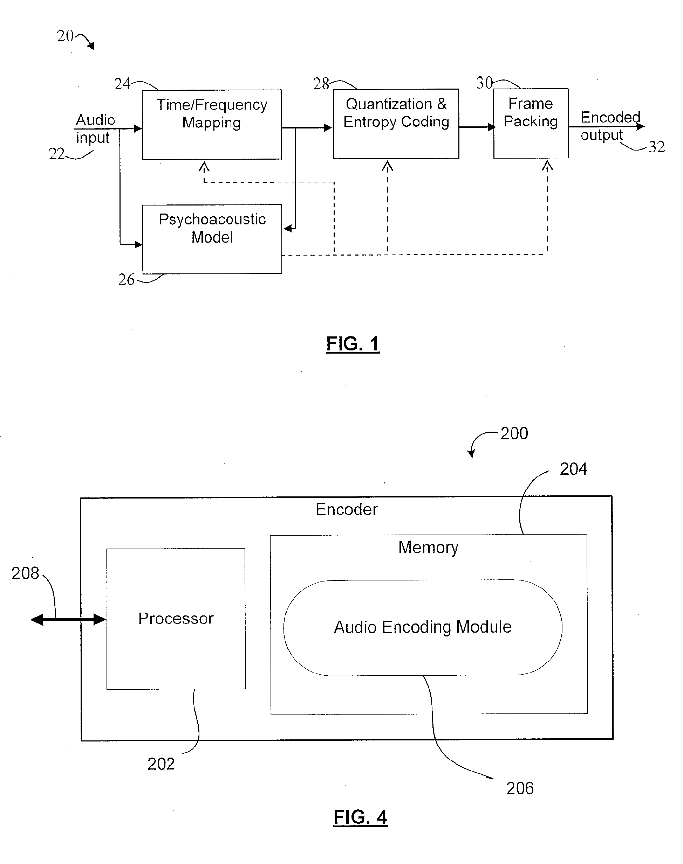

Reference is now made to Figure 1, which shows an example MP3 encoding process 20 to which example embodiments may be applied. Generally, the MP3 encoding process 20 receives digital audio input 22 and produces a compressed or encoded output 32 in the form of a bitstream for storage and transmission. The encoding process 20 may for example be implemented by an encoder such as a suitably configured computing device. In Figure 1, continuous lines denote the time or spectral domain signal flow, and dash lines denote the control information flow. As shown, the encoding process 20 includes audio input 22 for input to a time/frequency (T/F) mapping module 24 and a psychoacoustic model module 26. Also shown are a quantization and entropy coding module 28 and a frame packing module 30. The encoding process 20 results in an encoded output 32 of the audio input 22, for example for sending to a decoder for subsequent decoding.

The audio input 22 (in time domain) are first input into the T/F mapping module 24, which converts the audio input 22 into spectral coefficients. The T/F mapping module 24 is composed of three steps: pseudo-quadrature mirror filter (PQMF), windowing and modified discrete cosine transform (MDCT), and aliasing reduction. The PQMF filterbank splits a so-called granule (in MPEG I and II layer 3 each audio frame contains 2 and 1 granules respectively) of 576 input audio samples into 32 equally spaced subbands, where each subband has 18 time domain audio samples. The 18 time domain audio samples in each subband are then combined with their counterpart of the next frame, and processed by a sine-type window based on psychoacoustic modeling decisions. A long window, which covers a whole length of 36, addresses stationary audio parts. Long windowing with MDCT afterwards ensures a high frequency resolution, but also causes quantization errors spreading over the 1152 time-samples in the process of quantization. A short window is used to reduce the temporal noise to spread for the signals containing transients/attacks. In the short window, audio signals with a length of 36 are divided into 3 equal sub-blocks. In order to ensure a smooth transition from a long window to a short window and vice versa, two transition windows, long-short (start) and short-long (stop), which have the same size as a long window, are employed.

The psychoacoustic model module 26 is generally used to generate control information for the T/F mapping module 24, and for the quantization and entropy coding module 28. Based on the control information from the psychoacoustic model module 26, the spectral coefficients which are output from the T/F mapping module 24 are received by the quantization and entropy coding module 28, and are quantized and entropy coded. Finally these compressed bits streams are packed up along with format information, control information and other auxiliary data in MP3 frames, and output as the encoded output 32.

As noted above, long windowing results in a sequence of 36 audio samples. Short windowing results in a sequence of 12 audio samples. Accordingly, MP3 encoding involves performing 12-point MDCTs and 36-point MDCTs. The speed of the encoding process will partly depend on the ability to perform these transformations reasonably quickly. In other applications, the fast implementation of MDCT is often realized using complex-valued fast Fourier transform (FFT). However, because FFT requires the data length of the input sequence to be $2^m$ (m is an integer), it is not suitable for MP3 encoding. As a result it can be inefficient to calculate 12-point and 36-point MDCTs in MP3 audio coding. As noted above, more efficient MDCT algorithms have recently been proposed by employing fast discrete cosine transform (DCT) and discrete sine transform (DST). The present application presents an improved method for performing the MDCT process.

In this application, an N-point MDCT is converted into N/2-point DCT. A similar process is proposed in S.-W. Lee, "Improved algorithm for efficient computation of the forward and backward MDCT in MPEG audio coder", IEEE Transactions on Circuits and Systems-II: Analog and Digital Signal Processing, Vol. 48, No. 10, pp. 990-994, Oct. 2001. However, in the present application the N/2-point DCT matrix is then directly factored. The factoring may use Gaussian elimination and trigonometric identities. Experimental testing of the resulting algorithm shows it to be more computationally efficient than the algorithms developed in the literature thus far. Furthermore, in some embodiments, the multiplications in the process of converting MDCT into DCT can be merged into the windowing step in MP3 coding, which further reduces the computational complexity.

The present application first describes the development of the fast MDCT, including the definition of the various matrices for realizing the MDCT $X_k$ of input sequence $x_m$. Example embodiments of the fast MDCT are then described for 12-point and 36-point sequences, including the factorization of the DCT transform matrices, to realize the set of equations in each case for obtaining the DCT coefficients $Y_k$ from which the MDCT coefficients $X_k$ are easily obtained.

As a starting point, the forward MDCT can be represented by the following expression:

$$X_k = \sum_{m=0}^{N-1} x_m \cdot \cos[\frac{\pi}{2N}(2k+1)(2m+1+\frac{N}{2})], \quad k = 0,1,\cdots,\frac{N}{2}-1, \quad (1)$$

where $x_m$ is an audio input sequence of length N, and m = 0 , ..., N-1.

Reordering the input sequence $x_m$, results in a reordered input sequence $y_m$ with the following properties:

$$y_m = \begin{cases} -x_{m+(3N/4)}, & m = 0,1,\cdots,\frac{N}{4}-1 \\ x_{m-(N/4)}, & m = \frac{N}{4},\frac{N}{4}+1,\cdots N-1 \end{cases} \quad (2)$$

Reordering of the input sequence $x_m$ is useful for the purpose of the following description, but is not necessarily done in practical implementations.

Using the reordered input sequence $y_m$, the forward MDCT can be rewritten as:

$$X_k = \sum_{m=0}^{N-1} y_m \cdot \cos[\frac{\pi}{2N}(2k+1)(2m+1)], \quad k = 0,1,\cdots\frac{N}{2}-1. \quad (3)$$

Equation (3) can be further rewritten to define the MDCT coefficients $X_k$ as follows:

$$X_k = \sum_{m=0}^{N/2-1} (y_m - y_{N-1-m})\cos[\frac{\pi}{2N}(2k+1)(2m+1)] \quad (4)$$

Equation (4) defines the MDCT coefficients $X_k$ as a function of the reordered input sequence $y_m$. Below we define an interim sequence $w_m$ of length N/2, which incorporates the term $(y_m - y_{N-1-m})$ from equation (4). This permits us to define an N/2-point DCT $Y_k$ of the reordered input sequence as a function of the interim sequence $W_m$. From the coefficients of the N/2-point DCT $Y_k$ we can easily obtain the coefficients of the MDCT $X_k$.

The N/2-point DCT of the interim sequence $W_m$ is defined as follows:

$$Y_k = \sum_{m=0}^{N/2-1} w_m \cos[\frac{\pi}{N}k(2m+1)], \quad k = 0,1,\cdots\frac{N}{2}-1 \quad (5)$$

The interim sequence $W_m$ is defined by the following expression:

$$w_m = (y_m - y_{N-1-m}) \frac{1}{2\cos(\dfrac{\pi}{N} \dfrac{2m+1}{2})} \qquad (6)$$

In Equation (6), it will be understood that the index m ranges from 0 to N/2-1. Based on the foregoing definitions it can be shown that:

$$X_k = Y_k + Y_{k+1}, \quad k = 0,1, \cdots, N/2\text{-}1. \qquad (7)$$

It will be noted that $Y_{N/2} = 0$.

Those skilled in the art will appreciate from the foregoing description that $Y_k$ is the N/2-point DCT of $W_m$. Accordingly, the N-point MDCT transform is realized by resorting to N/2-point DCT. In addition, the MDCT requires N/2 multiplications in Equation (6) and (N/2)-1 additions in Equation (7). Instead of decomposing the N/2-point DCT into a pair of N/4-point DCT, the N/2-point DCT matrix may be factored to reduce the number of multiplications and additions required to realize the MDCT, as will be described in greater detail below.

Again, it will be appreciated that in many implementations the interim sequence $W_m$ may be directly calculated from the input sequence $x_m$ without performing a reordering operation. In some sense, the reordering is conceptual and is incorporated into the definition and calculation of $W_m$ from the input sequence $x_m$.

Before factoring the DCT transform matrix, it may be helpful in some embodiments to apply some preliminary scaling to avoid unnecessary multiplications. For example, we may redefine the interim sequence $W_m$ as follows:

$$w_m = (y_m - y_{N-1-m}) \frac{1}{2\sqrt{2}\cos(\dfrac{\pi}{N} \dfrac{2m+1}{2})} \qquad (8)$$

In Equation (8) above, the interim sequence $W_m$ has been scaled by a factor of $1/\sqrt{2}$. Accordingly, to compensate in the expression for the DCT coefficients $Y_k$ given by Equation (5), the expression may be descaled by a factor of $\sqrt{2}$, which gives:

$$Y_k = \sum_{m=0}^{N/2-1} w_m \sqrt{2} \cos[\frac{\pi}{N} k(2m+1)] \qquad (9)$$

In the example embodiments described below, the scaling and descaling may have a particular benefit in reducing the number of multiplications in 36-point MDCT.

### 12-point MDCT

The 12-point MDCT can be converted into 6-point DCT using Equations (7), (8), and (9). The resulting relationship for the 6-point DCT coefficients can be expressed in matrix form as $Y_k = D \cdot w_m$, where $k = 0,1,...,5$ and $m = 0,1,...,5$.

Illustrated in expanded matrix form for N=6, Equation (7) provides:

$$\begin{bmatrix} Y_0 \\ Y_1 \\ Y_2 \\ Y_3 \\ Y_4 \\ Y_5 \end{bmatrix} = \begin{bmatrix} d_0 & d_0 & d_0 & d_0 & d_0 & d_0 \\ d_1 & d_3 & d_5 & -d_5 & -d_3 & -d_1 \\ d_2 & 0 & -d_2 & -d_2 & 0 & d_2 \\ d_3 & -d_3 & -d_3 & d_3 & d_3 & -d_3 \\ d_4 & -2d_4 & d_4 & d_4 & -2d_4 & d_4 \\ d_5 & -d_3 & d_1 & -d_1 & d_3 & -d_5 \end{bmatrix} \cdot \begin{bmatrix} w_0 \\ w_1 \\ w_2 \\ w_3 \\ w_4 \\ w_5 \end{bmatrix} \qquad (10)$$

where

$$d_k = \sqrt{2}\cos(\frac{k}{12}\pi).$$

Note that if the DCT transform matrix D is divided in half vertically, the left half of each row is either a mirror image of the right or a negative mirror image. The DCT transform matrix D may be factored to group the mirror image rows together and the negative mirror image rows together to produce the following expression of the DCT transform matrix as a multiplication of matrices:

$$D = \begin{bmatrix} 1 & 0 & 0 & 0 & 0 & 0 \\ 0 & 0 & 0 & 1 & 0 & 0 \\ 0 & 1 & 0 & 0 & 0 & 0 \\ 0 & 0 & 0 & 0 & 1 & 0 \\ 0 & 0 & 1 & 0 & 0 & 0 \\ 0 & 0 & 0 & 0 & 0 & 1 \end{bmatrix} \begin{bmatrix} \sqrt{2} & \sqrt{2} & \sqrt{2} & \sqrt{2} & \sqrt{2} & \sqrt{2} \\ d_2 & 0 & -d_2 & -d_2 & 0 & d_2 \\ d_4 & -2d_4 & d_4 & d_4 & -2d_4 & d_4 \\ d_1 & 1 & d_5 & -d_5 & -1 & -d_1 \\ 1 & -1 & -1 & 1 & 1 & -1 \\ d_5 & -1 & d_1 & -d_1 & 1 & -d_5 \end{bmatrix} \qquad (11)$$

It will be noted that the upper left quarter of the rightmost matrix in Equation (11) is a mirror image of the upper right quarter. Similarly, the lower left quarter of the rightmost matrix in Equation (11) is a negative mirror image of the lower right quarter. The mirror imaging can be factored out to produce the following expression of DCT transform matrix D:

$$D = \begin{bmatrix} 1 & 0 & 0 & 0 & 0 & 0 \\ 0 & 0 & 0 & 1 & 0 & 0 \\ 0 & 1 & 0 & 0 & 0 & 0 \\ 0 & 0 & 0 & 0 & 1 & 0 \\ 0 & 0 & 1 & 0 & 0 & 0 \\ 0 & 0 & 0 & 0 & 0 & 1 \end{bmatrix} \begin{bmatrix} \sqrt{2} & \sqrt{2} & \sqrt{2} & 0 & 0 & 0 \\ d_2 & 0 & -d_2 & 0 & 0 & 0 \\ d_4 & -2d_4 & d_4 & 0 & 0 & 0 \\ 0 & 0 & 0 & d_5 & 1 & d_1 \\ 0 & 0 & 0 & -1 & -1 & 1 \\ 0 & 0 & 0 & d_1 & -1 & d_5 \end{bmatrix} \begin{bmatrix} 1 & 0 & 0 & 0 & 0 & 1 \\ 0 & 1 & 0 & 0 & 1 & 0 \\ 0 & 0 & 1 & 1 & 0 & 0 \\ 0 & 0 & 1 & -1 & 0 & 0 \\ 0 & 1 & 0 & 0 & -1 & 0 \\ 1 & 0 & 0 & 0 & 0 & -1 \end{bmatrix} \qquad (12)$$

The 3x3 submatrix in the lower right corner of the second matrix of Equation (12) can be rewritten to extract the middle row and be expressed as the addition of two matrices:

$$\begin{bmatrix} d_5 & 1 & d_1 \\ -1 & -1 & 1 \\ d_1 & -1 & d_5 \end{bmatrix} = \begin{bmatrix} d_5 & 1 & d_1 \\ 0 & 0 & 0 \\ d_1 & -1 & d_5 \end{bmatrix} + \begin{bmatrix} 0 & 0 & 0 \\ -1 & -1 & 1 \\ 0 & 0 & 0 \end{bmatrix} \qquad (13)$$

A trigonometric identity may be applied to simplify Equation (13). Recall that $\cos(\frac{\pi}{12}) = \cos(\frac{\pi}{4}) + \cos(\frac{5}{12}\pi)$. It will be appreciated that, $d_1 = 1 + d_5$, since $d_1 = \sqrt{2}\cos(\frac{1}{12}\pi)$ and $d_5 = \sqrt{2}\cos(\frac{5}{12}\pi)$.

Using the trigonometric identity, the first matrix on the right hand of Equation (13) may be factored as:

$$\begin{bmatrix} d_5 & 1 & d_1 \\ 0 & 0 & 0 \\ d_1 & -1 & d_5 \end{bmatrix} = \begin{bmatrix} 1 & 1 & 0 \\ 0 & 0 & 0 \\ 1 & 0 & 1 \end{bmatrix} \begin{bmatrix} d_5 & 0 & 0 \\ 0 & 1 & 0 \\ 0 & 0 & 1 \end{bmatrix} \begin{bmatrix} 1 & 0 & 1 \\ 0 & 1 & 1 \\ 1 & -1 & 0 \end{bmatrix} \qquad (14)$$

Having factored the DCT transform matrix D and performed the described simplifying operations to realize Equations (12), (13) and (14), we may now solve the matrix multiplications and perform certain simplifications to realize a set of equations for solving Equation (10) and obtaining the N/2-point DCT coefficients $Y_k$.

First, taking the expression of DCT transform matrix D in Equation (12) and the interim sequence $W_m$, we start with the rightmost matrix of Equation (12) and define the following variables:

$$a_0 = w_0 + w_5$$

$$a_5 = w_0 - w_5$$

$$a_1 = w_1 + w_4$$

$$a_4 = w_1 - w_4$$

$$a_2 = w_2 + w_3$$

$$a_3 = w_2 - w_3$$

The 3x3 matrix at the upper left corner of the middle matrix in Equation (12) results in the following expressions:
$$Y_2 = d_2 \, (a_0 - a_2);$$

$$Y_0 = d_0 \, ( \, a_0 + a_2 + a_1);$$

$$Y_4 = d_4 \, ( \, a_0 + a_2 - a_1 - a_1);$$

where $d_0 = \sqrt{2}$ and $d_4 = \sqrt{1/2}$ . Note that the term $a_0 + a_2$ appears in two of the above expression. We may define an interim variable $z_1 = a_0 + a_2$ for easy of computation. Thus we get the following:
$$Y_0 = \sqrt{2} \, ( \, z_1 + a_1);$$

$$Y_4 = \sqrt{1/2} \, (z_1 - a_1 - a_1);$$

Turning now to Equation (14), we can solve the matrix multiplication computing from right to left. Beginning with the rightmost matrix, we obtain $a_3 + a_5$; $a_4 + a_5$; and $a_3 - a_4$. From the second matrix of Equation (14), we get: $d_5 \cdot (a_3 + a_5)$; $a_4 + a_5$; and $a_3 - a_4$. Now proceeding to the leftmost matrix of Equation (14), we find the result of Equation (14) is:
$$d_5 \cdot (a_3 + a_5) + (a_4 + a_5);$$

0;

$$d_5 \cdot (\mathrm{a}_3 + \mathrm{a}_5) + (\mathrm{a}_3 - \mathrm{a}_4).$$

To save on computations, we define a second variable $z_1$ as $z_1 = d_5 \cdot (\mathrm{a}_3 + \mathrm{a}_5)$. If we then turn to the lower right hand 3x3 submatrix of the middle matrix in Equation (12) as defined in Equation (13), we obtain the following expressions:

$$Y_3 = \mathrm{a}_5 - \mathrm{a}_4 - \mathrm{a}_3;$$

$$Y_1 = z_1 + \mathrm{a}_4 + \mathrm{a}_5;$$

$$Y_5 = z_1 + \mathrm{a}_3 - \mathrm{a}_4;$$

Accordingly, above is a set of equations defining the DCT coefficients $Y_k$ in terms of the interim sequence $w_m$, which itself is defined in terms of the reordered input sequence $y_m$, as set out in Equation (8). It will be appreciated that the trigonometric term within the definition of the interim sequence $w_m$ in Equation (8) may be precalculated and stored in a lookup table for the various values of $m$ and N in some embodiments.

Advantageously, the above 6-point DCT requires 4 multiplications and 18 addtions.

**36-point MDCT**

The 36-point MDCT can be similarly converted into 18-point DCT using Equations (7), (8) and (9). The 18-point DCT transform matrix D may be expressed as:

$$\begin{bmatrix}
d_0 & d_0 & d_0 & d_0 & d_0 & d_0 & d_0 & d_0 & d_0 & d_0 & d_0 & d_0 & d_0 & d_0 & d_0 & d_0 & d_0 & d_0 \\
d_1 & d_3 & d_5 & d_7 & d_9 & d_{11} & d_{13} & d_{15} & d_{17} & -d_{17} & -d_{15} & -d_{13} & -d_{11} & -d_9 & -d_7 & -d_5 & -d_3 & -d_1 \\
d_2 & d_6 & d_{10} & d_{14} & 0 & -d_{14} & -d_{10} & -d_6 & -d_2 & -d_2 & -d_6 & -d_{10} & -d_{14} & 0 & d_{14} & d_{10} & d_6 & d_2 \\
d_3 & d_9 & d_{15} & -d_{15} & -d_9 & -d_3 & -d_3 & -d_9 & -d_{15} & d_{15} & d_9 & d_3 & d_3 & d_9 & d_{15} & -d_{15} & -d_9 & -d_3 \\
d_4 & d_{12} & -d_{16} & -d_8 & -d_0 & -d_8 & -d_{16} & d_{12} & d_4 & d_4 & d_{12} & -d_{16} & -d_8 & -d_0 & -d_8 & -d_{16} & d_{12} & d_4 \\
d_5 & d_{15} & -d_{11} & -d_1 & -d_9 & d_{17} & d_7 & d_3 & d_{13} & -d_{13} & -d_3 & -d_7 & -d_{17} & d_9 & d_1 & d_{11} & -d_{15} & -d_5 \\
d_6 & 0 & -d_6 & -d_6 & 0 & d_6 & d_6 & 0 & -d_6 & -d_6 & 0 & d_6 & d_6 & 0 & -d_6 & -d_6 & 0 & -d_6 \\
d_7 & -d_{15} & -d_1 & -d_{13} & d_9 & d_5 & -d_{17} & -d_3 & -d_{11} & d_{11} & d_3 & d_{17} & -d_5 & -d_9 & d_{13} & d_1 & d_{15} & -d_7 \\
d_8 & -d_{12} & -d_4 & d_{16} & d_0 & d_{16} & -d_4 & -d_{12} & d_8 & d_8 & -d_{12} & -d_4 & d_{16} & d_0 & d_{16} & -d_4 & -d_{12} & d_8 \\
d_9 & -d_9 & -d_9 & d_9 & d_9 & -d_9 & -d_9 & d_9 & d_9 & -d_9 & -d_9 & d_9 & d_9 & -d_9 & -d_9 & d_9 & d_9 & -d_9 \\
d_{10} & -d_6 & -d_{14} & d_2 & 0 & -d_2 & d_{14} & d_6 & -d_{10} & -d_{10} & d_6 & d_{14} & -d_2 & 0 & d_2 & -d_{14} & -d_6 & d_{10} \\
d_{11} & -d_3 & d_{17} & d_5 & -d_9 & -d_{13} & d_1 & -d_{15} & -d_7 & d_7 & d_{15} & -d_1 & d_{13} & d_9 & -d_5 & -d_{17} & d_3 & -d_{11} \\
d_{12} & -2d_{12} & d_{12} & d_{12} & -2d_{12} & d_{12} & d_{12} & -2d_{12} & d_{12} & d_{12} & -2d_{12} & d_{12} & d_{12} & -2d_{12} & d_{12} & d_{12} & -2d_{12} & d_{12} \\
d_{13} & -d_3 & d_7 & -d_{17} & -d_9 & d_1 & -d_{11} & -d_{15} & d_5 & -d_5 & d_{15} & d_{11} & -d_1 & -d_1 & d_{17} & -d_7 & d_3 & -d_{13} \\
d_{14} & -d_6 & d_2 & -d_{10} & 0 & d_{10} & -d_2 & d_6 & -d_{14} & -d_{14} & d_6 & -d_2 & d_{10} & 0 & -d_{10} & d_2 & -d_6 & d_{14} \\
d_{15} & -d_9 & d_3 & -d_3 & d_9 & -d_{15} & -d_{15} & d_9 & -d_3 & d_3 & -d_9 & d_{15} & d_{15} & -d_9 & d_3 & -d_3 & d_9 & -d_{15} \\
d_{16} & -d_{12} & d_8 & -d_4 & d_0 & -d_4 & d_8 & -d_{12} & d_{16} & d_{16} & -d_{12} & d_8 & -d_4 & d_0 & -d_4 & d_8 & -d_{12} & d_{16} \\
d_{17} & -d_{15} & d_{13} & -d_{11} & d_9 & -d_7 & d_5 & -d_3 & d_1 & -d_1 & d_3 & -d_5 & d_7 & -d_9 & d_{11} & -d_{13} & d_{15} & -d_{17}
\end{bmatrix}$$

where

$$d_k = \sqrt{2}\cos(\frac{k}{36}\pi).$$

Following an approach similar to the one described above in connection with 12-point MDCT, the matrix D may be factored to give:

$$D = \begin{bmatrix}
1 & 0 & 0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 1 & 0 & 0 & 0 & 0 & 0 & 0 & 0 & 0 \\
0 & 1 & 0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 1 & 0 & 0 & 0 & 0 & 0 & 0 & 0 \\
0 & 0 & 1 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 1 & 0 & 0 & 0 & 0 & 0 & 0 \\
0 & 0 & 0 & 1 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 1 & 0 & 0 & 0 & 0 & 0 \\
0 & 0 & 0 & 0 & 1 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 1 & 0 & 0 & 0 & 0 \\
0 & 0 & 0 & 0 & 0 & 1 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 1 & 0 & 0 & 0 \\
0 & 0 & 0 & 0 & 0 & 0 & 1 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 1 & 0 & 0 \\
0 & 0 & 0 & 0 & 0 & 0 & 0 & 1 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 & 1 & 0 \\
0 & 0 & 0 & 0 & 0 & 0 & 0 & 0 & 1 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 & 0 & 1
\end{bmatrix}$$

$$\times \begin{bmatrix} A & C \\ C & B \end{bmatrix} \times$$

$$\begin{bmatrix}
1 & 0 & 0 & 0 & 0 & 0 & 0 & 0 & 0 & 0 & 0 & 0 & 0 & 0 & 0 & 0 & 0 & 1 \\
0 & 1 & 0 & 0 & 0 & 0 & 0 & 0 & 0 & 0 & 0 & 0 & 0 & 0 & 0 & 0 & 1 & 0 \\
0 & 0 & 1 & 0 & 0 & 0 & 0 & 0 & 0 & 0 & 0 & 0 & 0 & 0 & 0 & 1 & 0 & 0 \\
0 & 0 & 0 & 1 & 0 & 0 & 0 & 0 & 0 & 0 & 0 & 0 & 0 & 0 & 1 & 0 & 0 & 0 \\
0 & 0 & 0 & 0 & 1 & 0 & 0 & 0 & 0 & 0 & 0 & 0 & 0 & 1 & 0 & 0 & 0 & 0 \\
0 & 0 & 0 & 0 & 0 & 1 & 0 & 0 & 0 & 0 & 0 & 0 & 1 & 0 & 0 & 0 & 0 & 0 \\
0 & 0 & 0 & 0 & 0 & 0 & 1 & 0 & 0 & 0 & 0 & 1 & 0 & 0 & 0 & 0 & 0 & 0 \\
0 & 0 & 0 & 0 & 0 & 0 & 0 & 1 & 0 & 0 & 1 & 0 & 0 & 0 & 0 & 0 & 0 & 0 \\
0 & 0 & 0 & 0 & 0 & 0 & 0 & 0 & 1 & 1 & 0 & 0 & 0 & 0 & 0 & 0 & 0 & 0 \\
0 & 0 & 0 & 0 & 0 & 0 & 0 & 0 & 1 & -1 & 0 & 0 & 0 & 0 & 0 & 0 & 0 & 0 \\
0 & 0 & 0 & 0 & 0 & 0 & 0 & 1 & 0 & 0 & -1 & 0 & 0 & 0 & 0 & 0 & 0 & 0 \\
0 & 0 & 0 & 0 & 0 & 0 & 1 & 0 & 0 & 0 & 0 & -1 & 0 & 0 & 0 & 0 & 0 & 0 \\
0 & 0 & 0 & 0 & 0 & 1 & 0 & 0 & 0 & 0 & 0 & 0 & -1 & 0 & 0 & 0 & 0 & 0 \\
0 & 0 & 0 & 0 & 1 & 0 & 0 & 0 & 0 & 0 & 0 & 0 & 0 & -1 & 0 & 0 & 0 & 0 \\
0 & 0 & 0 & 1 & 0 & 0 & 0 & 0 & 0 & 0 & 0 & 0 & 0 & 0 & -1 & 0 & 0 & 0 \\
0 & 0 & 1 & 0 & 0 & 0 & 0 & 0 & 0 & 0 & 0 & 0 & 0 & 0 & 0 & -1 & 0 & 0 \\
0 & 1 & 0 & 0 & 0 & 0 & 0 & 0 & 0 & 0 & 0 & 0 & 0 & 0 & 0 & 0 & -1 & 0 \\
1 & 0 & 0 & 0 & 0 & 0 & 0 & 0 & 0 & 0 & 0 & 0 & 0 & 0 & 0 & 0 & 0 & -1
\end{bmatrix}$$

where the submatrices A and B are defined as follows:

$$A = \begin{bmatrix}
d_0 & d_0 & d_0 & d_0 & d_0 & d_0 & d_0 & d_0 & d_0 \\
d_2 & d_6 & d_{10} & d_{14} & 0 & -d_{14} & -d_{10} & -d_6 & -d_2 \\
d_4 & d_{12} & -d_{16} & -d_8 & -d_0 & -d_8 & -d_{16} & d_{12} & d_4 \\
d_6 & 0 & -d_6 & -d_6 & 0 & d_6 & d_6 & d_6 & -d_6 \\
d_8 & -d_{12} & -d_4 & d_{16} & 0 & d_{16} & -d_4 & -d_{12} & d_8 \\
d_{10} & -d_6 & -d_{14} & d_2 & 0 & -d_2 & d_{14} & d_6 & -d_{10} \\
d_{12} & -2d_{12} & d_{12} & d_{12} & -2d_{12} & d_{12} & d_{12} & -2d_{12} & d_{12} \\
d_{14} & -d_6 & d_2 & -d_{10} & 0 & d_{10} & -d_2 & d_6 & -d_{14} \\
d_{16} & -d_{12} & d_8 & -d_4 & d_0 & -d_4 & d_8 & -d_{12} & d_{16}
\end{bmatrix}, \qquad (15)$$

$$B = \begin{bmatrix}
d_1 & d_3 & d_5 & d_7 & d_9 & d_{11} & d_{13} & d_{15} & d_{17} \\
d_3 & d_9 & d_{15} & -d_{15} & -d_9 & -d_3 & -d_3 & -d_9 & -d_{15} \\
d_5 & d_{15} & -d_{11} & -d_1 & -d_9 & d_{17} & d_7 & d_3 & d_{13} \\
d_7 & -d_{15} & -d_1 & -d_{13} & d_9 & d_5 & -d_{17} & -d_3 & -d_{11} \\
d_9 & -d_9 & -d_9 & d_9 & d_9 & -d_9 & -d_9 & d_9 & d_9 \\
d_{11} & -d_3 & d_{17} & d_5 & -d_9 & -d_{13} & d_1 & -d_{15} & -d_7 \\
d_{13} & -d_3 & d_7 & -d_{17} & -d_9 & d_1 & -d_{11} & -d_{15} & d_5 \\
d_{15} & -d_9 & d_3 & -d_3 & d_9 & -d_{15} & -d_{15} & d_9 & -d_3 \\
d_{17} & -d_{15} & d_{13} & -d_{11} & d_9 & -d_7 & d_5 & -d_3 & d_1
\end{bmatrix}, \qquad (16)$$

and wherein C is a 9x9 matrix with all elements zero.

The 9x9 matrix A can be factored as

$$A = \begin{bmatrix}
1 & 0 & 0 & 0 & 0 & 0 & 0 & 0 & 0 \\
0 & 0 & 0 & 0 & 0 & 1 & 0 & 0 & 0 \\
0 & 1 & 0 & 0 & 0 & 0 & 0 & 0 & 0 \\
0 & 0 & 0 & 0 & 0 & 0 & 1 & 0 & 0 \\
0 & 0 & 1 & 0 & 0 & 0 & 0 & 0 & 0 \\
0 & 0 & 0 & 0 & 0 & 0 & 0 & 1 & 0 \\
0 & 0 & 0 & 1 & 0 & 0 & 0 & 0 & 0 \\
0 & 0 & 0 & 0 & 0 & 0 & 0 & 0 & 1 \\
0 & 0 & 0 & 0 & 1 & 0 & 0 & 0 & 0
\end{bmatrix} \times \begin{bmatrix}
d_0 & d_0 & d_0 & d_0 & d_0 & 0 & 0 & 0 & 0 \\
d_4 & d_{12} & -d_{16} & -d_8 & -d_0 & 0 & 0 & 0 & 0 \\
d_8 & -d_{12} & -d_4 & -d_{16} & 0 & 0 & 0 & 0 & 0 \\
d_{12} & -2d_{12} & d_{12} & d_{12} & -2d_{12} & 0 & 0 & 0 & 0 \\
d_{16} & -d_{12} & d_8 & -d_4 & d_0 & 0 & 0 & 0 & 0 \\
0 & 0 & 0 & 0 & 0 & d_{14} & d_{10} & d_6 & d_2 \\
0 & 0 & 0 & 0 & 0 & -d_6 & -d_6 & 0 & d_6 \\
0 & 0 & 0 & 0 & 0 & d_2 & -d_{14} & -d_6 & d_{10} \\
0 & 0 & 0 & 0 & 0 & -d_{10} & d_2 & -d_6 & d_{14}
\end{bmatrix}$$

$$\times \begin{bmatrix} 1 & 0 & 0 & 0 & 0 & 0 & 0 & 0 & 1 \\ 0 & 1 & 0 & 0 & 0 & 0 & 0 & 1 & 0 \\ 0 & 0 & 1 & 0 & 0 & 0 & 1 & 0 & 0 \\ 0 & 0 & 0 & 1 & 0 & 1 & 0 & 0 & 0 \\ 0 & 0 & 0 & 0 & 1 & 0 & 0 & 0 & 0 \\ 0 & 0 & 0 & 1 & 0 & -1 & 0 & 0 & 0 \\ 0 & 0 & 1 & 0 & 0 & 0 & -1 & 0 & 0 \\ 0 & 1 & 0 & 0 & 0 & 0 & 0 & -1 & 0 \\ 1 & 0 & 0 & 0 & 0 & 0 & 0 & 0 & -1 \end{bmatrix} \tag{17}$$

It will be appreciated that the 5x5 submatrix in the top left corner of the second matrix on the right hand of Equation (17) can be converted into the following expression:

$$\begin{bmatrix} d_0 & d_0 & d_0 & d_0 & d_0 \\ d_4 & d_{12} & -d_{16} & -d_8 & -d_0 \\ d_8 & -d_{12} & -d_4 & -d_{16} & 0 \\ d_{12} & -2d_{12} & d_{12} & d_{12} & -2d_{12} \\ d_{16} & -d_{12} & d_8 & -d_4 & d_0 \end{bmatrix} = \begin{bmatrix} 1 & 0 & 0 & 0 & 0 \\ 0 & 0 & 0 & 1 & 0 \\ 0 & 1 & 0 & 0 & 0 \\ 0 & 0 & 1 & 0 & 0 \\ 0 & 0 & 0 & 0 & 1 \end{bmatrix} \times$$

$$\begin{bmatrix} d_0 & d_0 & d_0 & d_0 & d_0 \\ d_{12} & d_{12} & d_{12} & -2d_{12} & -2d_{12} \\ d_4 & -d_{16} & -d_8 & d_{12} & -d_0 \\ d_8 & -d_4 & -d_{16} & -d_{12} & 0 \\ d_{16} & d_8 & d_4 & -d_{12} & d_0 \end{bmatrix} \times \begin{bmatrix} 1 & 0 & 0 & 0 & 0 \\ 0 & 0 & 0 & 1 & 0 \\ 0 & 1 & 0 & 0 & 0 \\ 0 & 0 & 1 & 0 & 0 \\ 0 & 0 & 0 & 0 & 1 \end{bmatrix} \tag{18}$$

Since $d_4 = d_8 + d_{16}$, the 3x3 submatrix in the lower left corner of the second matrix on the right hand of Equation (18) can be factored as:

$$\begin{bmatrix} d_4 & -d_{16} & -d_8 \\ d_8 & -d_4 & d_{16} \\ d_{16} & d_8 & -d_4 \end{bmatrix} = \begin{bmatrix} 1 & 0 & 0 \\ 0 & 1 & 0 \\ 1 & -1 & 0 \end{bmatrix}\begin{bmatrix} 1 & 1 & 0 \\ 1 & 0 & 1 \\ 0 & 0 & 0 \end{bmatrix}\begin{bmatrix} d_4 & 0 & 0 \\ 0 & d_8 & 0 \\ 0 & 0 & d_{16} \end{bmatrix}\begin{bmatrix} 1 & -1 & 0 \\ 0 & 1 & -1 \\ -1 & 0 & 1 \end{bmatrix} \tag{19}$$

Similarly, the 4x4 submatrix in the lower right corner of the second matrix on the right hand of Equation (7) can be factored into:

$$\begin{bmatrix} d_{14} & d_{10} & d_6 & d_2 \\ -d_6 & -d_6 & 0 & d_6 \\ d_2 & -d_{14} & -d_6 & d_{10} \\ -d_{10} & d_2 & -d_6 & d_{14} \end{bmatrix} = \begin{bmatrix} 1 & 0 & 0 & 0 \\ 0 & 0 & 1 & 0 \\ 0 & 0 & 0 & 1 \\ 0 & 1 & 0 & 0 \end{bmatrix} \begin{bmatrix} d_{14} & d_{10} & d_2 & d_6 \\ d_2 & -d_{14} & d_{10} & -d_6 \\ -d_{10} & d_2 & d_{14} & -d_6 \\ -d_6 & -d_6 & d_6 & 0 \end{bmatrix} \begin{bmatrix} 1 & 0 & 0 & 0 \\ 0 & 1 & 0 & 0 \\ 0 & 0 & 0 & 1 \\ 0 & 0 & 1 & 0 \end{bmatrix} \quad (20)$$

Since $d_2 = d_{10} + d_{14}$, the 3x3 submatrix in the top left corner of the second matrix on the right hand of Equation (20) can be factored as:

$$\begin{bmatrix} d_{14} & d_{10} & d_2 \\ d_2 & -d_{14} & d_{10} \\ -d_{10} & d_2 & d_{14} \end{bmatrix} = \begin{bmatrix} 1 & 0 & 0 \\ 0 & 1 & 0 \\ 1 & -1 & 0 \end{bmatrix} \begin{bmatrix} 1 & 0 & 1 \\ 1 & -1 & 0 \\ 0 & 0 & 0 \end{bmatrix} \begin{bmatrix} d_2 & 0 & 0 \\ 0 & d_{14} & 0 \\ 0 & 0 & d_{10} \end{bmatrix} \begin{bmatrix} 1 & 0 & 1 \\ 0 & 1 & 1 \\ -1 & 1 & 0 \end{bmatrix} \quad (22)$$

Turning now to the matrix B defined in Equation 16, it can be factored into:

$$B = \begin{bmatrix} 1 & 0 & 0 & 0 & 0 & 0 & 0 & 0 & 0 \\ 0 & 0 & 0 & 0 & 0 & 0 & 0 & 1 & 0 \\ 0 & 1 & 0 & 0 & 0 & 0 & 0 & 0 & 0 \\ 0 & 0 & 1 & 0 & 0 & 0 & 0 & 0 & 0 \\ 0 & 0 & 0 & 0 & 0 & 0 & 0 & 1 & 0 \\ 0 & 0 & 0 & 1 & 0 & 0 & 0 & 0 & 0 \\ 0 & 0 & 0 & 0 & 1 & 0 & 0 & 0 & 0 \\ 0 & 0 & 0 & 0 & 0 & 0 & 0 & 0 & 1 \\ 0 & 0 & 0 & 0 & 0 & 1 & 0 & 0 & 0 \end{bmatrix} \begin{bmatrix} B_1 \\ B_2 \end{bmatrix} \quad (23)$$

where

$$B_1 = \begin{bmatrix} d_1 & d_3 & d_5 & d_7 & d_9 & d_{11} & d_{13} & d_{15} & d_{17} \\ d_5 & d_{15} & -d_{11} & -d_1 & -d_9 & d_{17} & d_7 & d_3 & d_{13} \\ d_7 & -d_{15} & -d_1 & -d_{13} & d_9 & d_5 & -d_{17} & -d_3 & -d_{11} \\ d_{11} & -d_3 & d_{17} & d_5 & -d_9 & -d_{13} & d_1 & -d_{15} & -d_7 \\ d_{13} & -d_3 & d_7 & -d_{17} & -d_9 & d_1 & -d_{11} & -d_{15} & d_5 \\ d_{17} & -d_{15} & d_{13} & -d_{11} & d_9 & -d_7 & d_5 & -d_3 & d_1 \end{bmatrix} \quad (24)$$

$$\mathbf{B}_2 = \begin{bmatrix} d_3 & d_9 & d_{15} & -d_{15} & -d_9 & -d_3 & -d_3 & -d_9 & -d_{15} \\ d_9 & -d_9 & -d_9 & d_9 & d_9 & -d_9 & -d_9 & d_9 & d_9 \\ d_{15} & -d_9 & d_3 & -d_3 & d_9 & -d_{15} & -d_{15} & d_9 & -d_3 \end{bmatrix} \qquad (25)$$

The matrix $\mathbf{B}_1$ can be further factored into:

$$\mathbf{B}_1 = \begin{bmatrix} d_1 & d_5 & d_7 & d_{11} & d_{13} & d_{17} & d_3 & d_9 & d_{15} \\ d_5 & -d_{11} & -d_1 & d_{17} & d_7 & d_{13} & d_{15} & -d_9 & d_3 \\ d_7 & -d_1 & -d_{13} & d_5 & -d_{17} & -d_{11} & -d_{15} & d_9 & -d_3 \\ d_{11} & d_{17} & d_5 & -d_{13} & d_1 & -d_7 & -d_3 & -d_9 & -d_{15} \\ d_{13} & d_7 & -d_{17} & d_1 & -d_{11} & d_5 & -d_3 & -d_9 & -d_{15} \\ d_{17} & d_{13} & -d_{11} & -d_7 & d_5 & d_1 & -d_{15} & d_9 & -d_3 \end{bmatrix} \times$$

$$\begin{bmatrix} 1 & 0 & 0 & 0 & 0 & 0 & 0 & 0 & 0 \\ 0 & 0 & 1 & 0 & 0 & 0 & 0 & 0 & 0 \\ 0 & 0 & 0 & 1 & 0 & 0 & 0 & 0 & 0 \\ 0 & 0 & 0 & 0 & 0 & 1 & 0 & 0 & 0 \\ 0 & 0 & 0 & 0 & 0 & 0 & 1 & 0 & 0 \\ 0 & 0 & 0 & 0 & 0 & 0 & 0 & 1 & 0 \\ 0 & 1 & 0 & 0 & 0 & 0 & 0 & 0 & 0 \\ 0 & 0 & 0 & 0 & 1 & 0 & 0 & 0 & 0 \\ 0 & 0 & 0 & 0 & 0 & 0 & 0 & 0 & 1 \end{bmatrix} \qquad (26)$$

Since $d_3 = d_9 + d_{15}$, the 6x3 submatrix at the right of the first matrix on the right hand of Equation (26) can be factored as:

$$\begin{bmatrix} d_3 & d_9 & d_{15} \\ d_{15} & -d_9 & d_3 \\ -d_{15} & d_9 & -d_3 \\ -d_3 & -d_9 & -d_{15} \\ -d_3 & -d_9 & -d_{15} \\ -d_{15} & d_9 & -d_3 \end{bmatrix} = \begin{bmatrix} 1 & 1 & 0 \\ 0 & -1 & 1 \\ 0 & 1 & -1 \\ -1 & -1 & 0 \\ -1 & -1 & 0 \\ 0 & 1 & -1 \end{bmatrix} + d_{15} \times \begin{bmatrix} 1 & 0 & 1 \\ 1 & 0 & 1 \\ -1 & 0 & -1 \\ -1 & 0 & -1 \\ -1 & 0 & -1 \\ -1 & 0 & -1 \end{bmatrix} \qquad (27)$$

Turning first to the 6x6 submatrix at the left of the first matrix on the right hand of Equation (26),

$$M = \begin{bmatrix} d_1 & d_5 & d_7 & d_{11} & d_{13} & d_{17} \\ d_5 & -d_{11} & -d_1 & d_{17} & d_7 & d_{13} \\ d_7 & -d_1 & -d_{13} & d_5 & -d_{17} & -d_{11} \\ d_{11} & d_{17} & d_5 & -d_{13} & d_1 & -d_7 \\ d_{13} & d_7 & -d_{17} & d_1 & -d_{11} & d_5 \\ d_{17} & d_{13} & -d_{11} & -d_1 & d_5 & d_1 \end{bmatrix} \tag{28}$$

Trigonometric identities give us the following relationships:

$$\begin{cases} d_1 = d_{11} + d_{13} \\ d_5 = d_7 + d_{17} \end{cases} \tag{29}$$

Accordingly, the matrix M may be factored by factoring the four 3x3 submatrices of M respectively as in (19) and (20). After this factorization, there will be 12 multiplications remaining. However, in the following example embodiment, a different approach is adopted that will result in requiring only 6 multiplications after the factorization.

Using the following trigonometric identities:

$$\begin{cases} \sqrt{2} = 2\cos(\frac{9}{36}\pi) \\ 2\cos\alpha\cos\beta = \cos(\alpha+\beta) + \cos(\alpha-\beta) \end{cases} \tag{30}$$

the matrix M may be decomposed into:

$$M = \begin{bmatrix} c_8 & c_4 & c_{16} & -c_{16} & c_4 & c_8 \\ c_4 & c_{16} & -c_8 & c_8 & c_{16} & c_4 \\ c_{16} & -c_8 & -c_4 & c_4 & -c_8 & c_{16} \\ -c_{16} & c_8 & c_4 & -c_4 & c_8 & -c_{16} \\ c_4 & c_{16} & -c_8 & c_8 & c_{16} & c_4 \\ c_8 & c_4 & c_{16} & -c_{16} & c_4 & c_8 \end{bmatrix} + \begin{bmatrix} c_{10} & c_{14} & c_2 & -c_2 & -c_{14} & -c_{10} \\ c_{14} & -c_2 & -c_{10} & -c_{10} & c_2 & -c_{14} \\ c_2 & -c_{10} & c_{14} & c_{14} & c_{10} & -c_2 \\ c_2 & -c_{10} & c_{14} & c_{14} & c_{10} & c_2 \\ -c_{14} & c_2 & c_{10} & c_{10} & -c_2 & c_{14} \\ -c_{10} & -c_{14} & -c_2 & -c_2 & c_{14} & c_{10} \end{bmatrix} \tag{31}$$

wherein

$$c_k = \cos(\frac{k}{36}\pi).$$

The first matrix on the right hand of Equation (31) may be factored as:

$$\begin{bmatrix} c_{10} & c_{14} & c_2 & -c_2 & -c_{14} & -c_{10} \\ c_{14} & -c_2 & -c_{10} & -c_{10} & c_2 & -c_{14} \\ c_2 & -c_{10} & c_{14} & c_{14} & c_{10} & -c_2 \\ c_2 & -c_{10} & c_{14} & c_{14} & c_{10} & c_2 \\ -c_{14} & c_2 & c_{10} & c_{10} & -c_2 & c_{14} \\ -c_{10} & -c_{14} & -c_2 & -c_2 & c_{14} & c_{10} \end{bmatrix} = \begin{bmatrix} 1 & 0 & 0 & 0 & 0 & 0 \\ 0 & 1 & 0 & 0 & 0 & 0 \\ 0 & 0 & 1 & 0 & 0 & 0 \\ 0 & 0 & 1 & 0 & 0 & 0 \\ 0 & -1 & 0 & 0 & 0 & 0 \\ -1 & 0 & 0 & 0 & 0 & 0 \end{bmatrix} \times \begin{bmatrix} c_{10} & c_{14} & c_2 & c_2 & -c_{14} & -c_{10} \\ c_{14} & -c_2 & -c_{10} & -c_{10} & c_2 & -c_{14} \\ c_2 & -c_{10} & c_{14} & c_{14} & c_{10} & -c_2 \\ 0 & 0 & 0 & 0 & 0 & 0 \\ 0 & 0 & 0 & 0 & 0 & 0 \\ 0 & 0 & 0 & 0 & 0 & 0 \end{bmatrix} \quad (32)$$

and the second matrix on the right hand of Equation (32) may be further factored as:

$$\begin{bmatrix} c_{10} & c_{14} & c_2 & c_2 & -c_{14} & -c_{10} \\ c_{14} & -c_2 & -c_{10} & -c_{10} & c_2 & -c_{14} \\ c_2 & -c_{10} & c_{14} & c_{14} & c_{10} & -c_2 \\ 0 & 0 & 0 & 0 & 0 & 0 \\ 0 & 0 & 0 & 0 & 0 & 0 \\ 0 & 0 & 0 & 0 & 0 & 0 \end{bmatrix} = \begin{bmatrix} 1 & 0 & 1 & 0 & 0 & 0 \\ 0 & 1 & -1 & 0 & 0 & 0 \\ 1 & 1 & 0 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \end{bmatrix} \times \begin{bmatrix} c_{10} & 0 & 0 & 0 & 0 & 0 \\ 0 & c_{14} & 0 & 0 & 0 & 0 \\ 0 & 0 & c_2 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \end{bmatrix} \quad (33)$$

$$\times \begin{bmatrix} 1 & -1 & 0 & 0 & 0 & 0 \\ 1 & 0 & 1 & 0 & 0 & 0 \\ 0 & 1 & 1 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \end{bmatrix} \times \begin{bmatrix} 1 & 0 & 0 & 0 & 0 & -1 \\ 0 & 1 & 0 & 0 & -1 & 0 \\ 0 & 0 & 1 & 1 & 0 & 0 \\ 0 & 0 & 0 & 0 & 0 & 0 \\ 0 & 0 & 0 & 0 & 0 & 0 \\ 0 & 0 & 0 & 0 & 0 & 0 \end{bmatrix}$$

Similarly, the second matrix on the right hand of Equation (31) may be factored as:

$$\begin{bmatrix} c_8 & c_4 & c_{16} & -c_{16} & c_4 & c_8 \\ c_4 & c_{16} & -c_8 & c_8 & c_{16} & c_4 \\ c_{16} & -c_8 & -c_4 & c_4 & -c_8 & c_{16} \\ -c_{16} & c_8 & c_4 & -c_4 & c_8 & -c_{16} \\ c_4 & c_{16} & -c_8 & c_8 & c_{16} & c_4 \\ c_8 & c_4 & c_{16} & -c_{16} & c_4 & c_8 \end{bmatrix} = \begin{bmatrix} 1 & 0 & 0 & 0 & 0 & 0 \\ 0 & 1 & 0 & 0 & 0 & 0 \\ 0 & 0 & 1 & 0 & 0 & 0 \\ 0 & 0 & -1 & 0 & 0 & 0 \\ 0 & 1 & 0 & 0 & 0 & 0 \\ 1 & 0 & 0 & 0 & 0 & 0 \end{bmatrix} \begin{bmatrix} c_8 & c_4 & c_{16} & -c_{16} & c_4 & c_8 \\ c_4 & c_{16} & -c_8 & c_8 & c_{16} & c_4 \\ c_{16} & -c_8 & -c_4 & c_4 & -c_8 & c_{16} \\ 0 & 0 & 0 & 0 & 0 & 0 \\ 0 & 0 & 0 & 0 & 0 & 0 \\ 0 & 0 & 0 & 0 & 0 & 0 \end{bmatrix} \quad (34)$$

wherein the second matrix on the right hand of Equation (34) may be further factored as:

$$\begin{bmatrix} c_8 & c_4 & c_{16} & -c_{16} & c_4 & c_8 \\ c_4 & c_{16} & -c_8 & c_8 & c_{16} & c_4 \\ c_{16} & -c_8 & -c_4 & c_4 & -c_8 & c_{16} \\ 0 & 0 & 0 & 0 & 0 & 0 \\ 0 & 0 & 0 & 0 & 0 & 0 \\ 0 & 0 & 0 & 0 & 0 & 0 \end{bmatrix} = \begin{bmatrix} 1 & 1 & 0 & 0 & 0 & 0 \\ 1 & 0 & -1 & 0 & 0 & 0 \\ 0 & -1 & -1 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \end{bmatrix} \times \begin{bmatrix} c_4 & 0 & 0 & 0 & 0 & 0 \\ 0 & c_{16} & 0 & 0 & 0 & 0 \\ 0 & 0 & c_8 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \end{bmatrix}$$

$$\times \begin{bmatrix} 1 & 1 & 0 & 0 & 0 & 0 \\ -1 & 0 & 1 & 0 & 0 & 0 \\ 0 & 1 & 1 & 0 & 0 & 0 \\ 0 & 0 & 0 & 0 & 0 & 0 \\ 0 & 0 & 0 & 0 & 0 & 0 \\ 0 & 0 & 0 & 0 & 0 & 0 \end{bmatrix} \times \begin{bmatrix} 1 & 0 & 0 & 0 & 0 & 1 \\ 0 & 1 & 0 & 0 & 1 & 0 \\ 0 & 0 & 1 & -1 & 0 & 0 \\ 0 & 0 & 0 & 0 & 0 & 0 \\ 0 & 0 & 0 & 0 & 0 & 0 \\ 0 & 0 & 0 & 0 & 0 & 0 \end{bmatrix} \quad (35)$$

The matrix of $B_2$ from Equation (25) may be factored as:

$$B_2 = \begin{bmatrix} d_3 & 1 & d_{15} & 0 & 0 & 0 & 0 & 0 & 0 \\ 1 & -1 & -1 & 0 & 0 & 0 & 0 & 0 & 0 \\ d_{15} & -1 & d_3 & 0 & 0 & 0 & 0 & 0 & 0 \end{bmatrix} \times \begin{bmatrix} 1 & 0 & 0 & 0 & 0 & -1 & -1 & 0 & 0 \\ 0 & 1 & 0 & 0 & -1 & 0 & 0 & -1 & 0 \\ 0 & 0 & 1 & -1 & 0 & 0 & 0 & 0 & -1 \\ 0 & 0 & 0 & 0 & 0 & 0 & 0 & 0 & 0 \\ 0 & 0 & 0 & 0 & 0 & 0 & 0 & 0 & 0 \\ 0 & 0 & 0 & 0 & 0 & 0 & 0 & 0 & 0 \\ 0 & 0 & 0 & 0 & 0 & 0 & 0 & 0 & 0 \\ 0 & 0 & 0 & 0 & 0 & 0 & 0 & 0 & 0 \\ 0 & 0 & 0 & 0 & 0 & 0 & 0 & 0 & 0 \end{bmatrix} \quad (36)$$

The 3x3 submatrix at the left of the first matrix on the right hand of Equation (36) can be converted into:

$$\begin{bmatrix} d_3 & 1 & d_{15} \\ 1 & -1 & -1 \\ d_{15} & -1 & d_3 \end{bmatrix} = \begin{bmatrix} d_3 & 1 & d_{15} \\ 0 & 0 & 0 \\ d_{15} & -1 & d_3 \end{bmatrix} + \begin{bmatrix} 0 & 0 & 0 \\ 1 & -1 & -1 \\ 0 & 0 & 0 \end{bmatrix} \quad (37)$$

Based on trigonometric identities, it is known that $d_3=1+d_{15}$, meaning that the first matrix on the right hand of Equation (37) can be factored as:

$$\begin{bmatrix} d_3 & 1 & d_{15} \\ 0 & 0 & 0 \\ d_{15} & -1 & d_3 \end{bmatrix} = \begin{bmatrix} 1 & 0 & 1 \\ 0 & 0 & 0 \\ 1 & 1 & 0 \end{bmatrix} \begin{bmatrix} d_{15} & 0 & 0 \\ 0 & 1 & 0 \\ 0 & 0 & 1 \end{bmatrix} \begin{bmatrix} 1 & 0 & 1 \\ 0 & -1 & 1 \\ 1 & 1 & 0 \end{bmatrix} \tag{38}$$

Having factored the DCT transform matrix D and performed the described simplifying operations to realize Equations (15) through (38), we may now solve the matrix multiplications and perform certain simplifications to realize a set of equations for obtaining the 18-point DCT coefficients $Y_k$.

Beginning with the rightmost matrix from the initial factorization of D the following interim variables can be defined:

$$a_0 = w_0 - w_{17}; \qquad b_0 = w_0 + w_{17};$$

$$a_1 = w_1 - w_{16}; \qquad b_1 = w_1 + w_{16};$$

$$a_2 = w_2 - w_{15}; \qquad b_2 = w_2 + w_{15};$$

$$a_3 = w_3 - w_{14}; \qquad b_3 = w_3 + w_{14};$$

$$a_4 = w_4 - w_{13}; \qquad b_4 = w_4 + w_{13};$$

$$a_5 = w_5 - w_{12}; \qquad b_5 = w_5 + w_{12};$$

$$a_6 = w_6 - w_{11}; \qquad b_6 = w_6 + w_{11};$$

$$a_7 = w_7 - w_{10}; \qquad b_7 = w_7 + w_{10};$$

$$a_8 = w_8 - w_9; \qquad b_8 = w_8 + w_9;$$

Turning next to the rightmost matrix in the factorization of $B_2$ shown in Equation (36), the following temporary variables may be defined:

$$t0_0 = a_0 - a_5 - a_6;$$

$$t0_1 = a_1 - a_4 - a_7;$$

$$t0_2 = a_2 - a_3 - a_8;$$

Now taking the rightmost matrix of Equation (37), we can define one of the DCT coefficients in terms of these temporary variables:

$$Y_9 = t0_0 - t0_1 - t0_2;$$

From Equation (38), it may be noted that it may be useful to define the interim quantity $z_3 = (t0_0 + t0_2) \cdot d_{15}$. Two more DCT coefficients may then be expressed as:

$$Y_3 = z_3 + t0_0 + t0_1;$$

$$Y_{15} = z_3 + t0_2 - t0_1;$$

Now taking the rightmost matrix of Equation (35), three new temporary variables may be defined:

$$\mathrm{tmp0}_0 = a_0 + a_8;$$

$$\mathrm{tmp0}_1 = a_2 + a_6;$$

$$\mathrm{tmp0}_2 = a_3 - a_5;$$

From the second and third matrices on the right hand of Equation (35), we get
$$\mathrm{ttmp}_0 = (\mathrm{tmp0}_0 + \mathrm{tmp0}_1) \cdot c_4;$$

$$\mathrm{ttmp}_1 = (\mathrm{tmp0}_2 - \mathrm{tmp0}_0) \cdot c_{16};$$

$$\mathrm{ttmp}_2 = (\mathrm{tmp0}_1 + \mathrm{tmp0}_2) \cdot c_8;$$

From the first matrix on the right hand of Equation (35), we get
$$\mathrm{tmp0}_0 = \mathrm{ttmp}_0 + \mathrm{ttmp}_1;$$

$$\mathrm{tmp0}_1 = \mathrm{ttmp}_0 - \mathrm{ttmp}_2;$$

It will be appreciated that the computation of $\mathrm{tmp0}_2$ is unnecessary as we can show that $\mathrm{tmp0}_2 = \mathrm{tmp0}_1 - \mathrm{tmp0}_0$.
From the rightmost matrix of Equation (33), we can define the variables:
$$\mathrm{tmp1}_0 = a_0 - a_8;$$

$$tmp1_1 = a_2 - a_6;$$

$$tmp1_2 = a_3 + a_5;$$

Then from the first, second and third matrices on the right hand of Equation (33), we get:

$$ttmp_0 = (tmp1_0 - tmp1_1) \cdot c_{10};$$

$$ttmp_1 = (tmp1_2 + tmp1_0) \cdot c_{14};$$

$$ttmp_2 = (tmp1_1 + tmp1_2) \cdot c_2;$$

$$tmp1_0 = ttmp_0 + ttmp_2;$$

$$tmp1_1 = ttmp_1 - ttmp_2;$$

Again, it will be appreciated that the computation of $tmp1_2$ is unnecessary since $tmp1_2 = tmp1_1 + tmp1_0$;

Turning now to the second matrix on the right hand of Equation (27), we can see we only need to compute $temp_1 = d_{15} \cdot (a_1 + a_7)$, as each row is either $temp_1$ or $- temp_1$.

From the first matrix on the right hand of Equation (27), we can see we only need to compute $temp_2 = a_1 + a_4$, and $temp_3 = a_7 - a_4$, as each row in the first matrix takes on one of the following 4 values: temp2, -temp2, temp3, -temp3.

We now define $tmp2_0 = temp_1 + temp_2$, and $tmp2_1 = temp_1 + temp_3$.

After applying matrix multiplicaiton and addition, each row takes one of the following 4 values: $tmp2_0$, $tmp2_1$, $-tmp2_0$, $-tmp2_1$.

From Equations (26), (27), (32) and (34), we get

$$Y_1 = tmp0_0 + tmp1_0 + tmp2_0;$$

$$Y_{13} = \text{tmp0}_1 - \text{tmp1}_1 - \text{tmp2}_0;$$

$$Y_{11} = -\text{tmp0}_2 + \text{tmp1}_2 - \text{tmp2}_0 = \text{tmp0}_0 + \text{tmp1}_0 - (\text{tmp0}_1 - \text{tmp1}_1) - \text{tmp2}_0;$$

$$\text{Let temp}_1 = \text{tmp0}_0 + \text{tmp1}_0;$$

$$\text{Let temp}_2 = \text{tmp0}_1 - \text{tmp1}_1;$$

$$Y_1 = \text{temp}_1 + \text{tmp2}_0;$$

$$Y_{13} = \text{temp}_2 - \text{tmp2}_0;$$

$$Y_{11} = \text{temp}_1 - \text{temp}_2 - \text{tmp2}_0;$$

We also have:
$$Y_5 = \text{tmp0}_1 + \text{tmp1}_1 + \text{tmp2}_1;$$

$$Y_{17} = \text{tmp0}_0 - \text{tmp1}_0 - \text{tmp2}_1;$$

$$Y_7 = (\text{tmp0}_1 + \text{tmp1}_{1)} \quad - (\text{tmp0}_0 - \text{tmp1}_0) \quad - \text{tmp2}_{1;}$$

$$\text{Let } \text{temp}_1 = \text{tmp0}_1 + \text{tmp1}_1;$$

$$\text{Let } \text{temp}_2 = \text{tmp0}_0 - \text{tmp1}_0;$$

$$Y_5 = \text{temp}_1 + \text{tmp2}_1;$$

$$Y_{17} = \text{temp}_2 - \text{tmp2}_1;$$

$$Y_7 = \text{temp}_1 - \text{temp}_2 - \text{tmp2}_{1;}$$

From the bottom 4 rows of the third matrix on the right hand of Equation (17), we get:
$$\text{xx}_0 = b_0 - b_8;$$

$$\text{xx}_1 = b_1 - b_7;$$

$$\text{xx2} = b_2 - b_6;$$

$$xx3 = b_3 - b_5;$$

From the third and fourth matirces on the right hand of Equation (22) and the third matrix on the right hand of Equation (20), we get:
$$tmp0_0 = (xx_0 + xx_3) \cdot d_2;$$

$$tmp0_1 = (xx_0 + xx_2) \cdot d_{14};$$

$$tmp0_2 = (xx_2 - xx_3) \cdot d_{10};$$

From the first and second matirces on the right hand of Equation (22):
$$ttmp_0 = tmp0_0 + tmp0_2;$$

$$ttmp_1 = tmp0_0 - tmp0_1;$$

$$ttmp_2 = tmp0_1 + tmp0_2;$$

From the fourth row of the second matrix on the right hand of Equation (20), and also reodering in Equation (20), we realize:
$$Y_6 = (xx_0 - xx_2 - xx_3) \cdot d_6;$$

From the fourth colum of the second matrix on the right hand of Equation (20) and reordering, we compute:
$$temp_1 = xx_1 \cdot d_6;$$

From the above, the matrix multiplcaiton and addi tion of the second matrix on the right hand of Equation (20), and reordering in the first matrix on the right hand of Equation (20), we get:

$$Y_2 = ttmp_0 + temp_1;$$

$$Y_{10} = ttmp_1 - temp_1;$$

$$Y_{14} = ttmp_2 - temp_1;$$

From the top 4 rows of the third matrix on the right hand of Equation (17), we get:

$$xx_0 = b_0 + b_8;$$

$$xx_1 = b_1 + b_7;$$

$$xx_2 = b_2 + b_6;$$

$$xx_3 = b_3 + b_5;$$

From the third and 4th matrices of the right hand of Equation (19), we get:

$$tmp1_0 = (xx_0 - xx_2) \cdot d_4;$$

$$tmp1_1 = (xx_2 - xx_3) \cdot d_8;$$

$$tmp1_2 = (xx_3 - xx_0) \cdot d_{16};$$

From the 1st and 2nd matrices of the right hand of Equation (19), we get:
$$ttmp_0 = tmp1_0 + tmp1_1;$$

$$ttmp_1 = tmp1_0 + tmp1_2;$$

$$ttmp_2 = tmp1_1 - tmp1_2;$$

From the 4th and 5th column elments in the 3rd and 5th row of the 2nd matrix of the right hand of Equation (18), we get:
$$temp_2 = (xx_1 - b_4 - b_4) \cdot \sqrt{1/2};$$

From the 3rd, 4th and 5th rows of the 2nd matrix of the right hand of Equation (18) and reordering in Equation (18), we get:
$$Y_4 = ttmp_0 + temp_2;$$

$$Y_8 = ttmp_1 - temp_2;$$

$$Y_{16} = ttmp_2 - temp_2;$$

$$\text{Let temp}_1 = xx_0 + xx_2 + xx_3;$$

$$\text{Let temp}_2 = xx_1 + b_4;$$

From the 1st row of the 2nd matrix on the right hand of Equation (18), and reordering, we get
$$Y_0 = (\ \text{temp}_1 + \text{temp}_2\ )\ \cdot\ \sqrt{2}\ ;$$

From the 2nd row of of the 2nd matrix on the right hand of Equation (18), and reordering, we get:
$$Y_{12} = (\ \text{temp}_1 - \text{temp}_2 - \text{temp}_2\ )\ \cdot\ \sqrt{1/2}\ .$$

Accordingly, we have expressions for each of the DCT coefficients $Y_k$ in terms of pre-calculated trigonometric values and the sample points of the interim sequence $w_m$.
Based on these expressions, example pseudo code for implementing 18-point DCT is:
$$a_0 = w_0 - w_{17}; \qquad b_0 = w_0 + w_{17};$$

$$a_1 = w_1 - w_{16}; \qquad b_1 = w_1 + w_{16};$$

$$a_2 = w_2 - w_{15}; \qquad b_2 = w_2 + w_{15};$$

$$a_3 = w_3 - w_{14}; \qquad b_3 = w_3 + w_{14};$$

$$a_4 = w_4 - w_{13}; \qquad b_4 = w_4 + w_{13};$$

$$a_5 = w_5 - w_{12}; \qquad b_5 = w_5 + w_{12};$$

$$a_6 = w_6 - w_{11}; \qquad b_6 = w_6 + w_{11};$$

$$a_7 = w_7 - w_{10}; \qquad b_7 = w_7 + w_{10};$$

$$a_8 = w_8 - w_9; \qquad b_8 = w_8 + w_9;$$

$$t0_0 = a_0 - a_5 - a_6;$$

$$t0_1 = a_1 - a_4 - a_7;$$

$$t0_2 = a_2 - a_3 - a_8;$$

$$Y_9 = t0_0 - t0_1 - t0_2;$$

$$z = (t0_0 + t0_2) \cdot d_{15};$$

$$Y_3 = z + t0_0 + t0_1;$$

$$Y_{15} = z + t0_2 - t0_1;$$

$$tmp0_0 = a_0 + a_8;$$

$$tmp0_1 = a_2 + a_6;$$

$$tmp0_2 = a_3 - a_5;$$

$$ttmp_0 = (tmp0_0 + tmp0_1) \cdot c_4;$$

$$ttmp_1 = (tmp0_2 - tmp0_0) \cdot c_{16};$$

$$ttmp_2 = (tmp0_1 + tmp0_2) \cdot c_8;$$

$$tmp0_0 = ttmp_0 + ttmp_1;$$

$$tmp0_1 = ttmp_0 - ttmp_2;$$

$$tmp1_0 = a_0 - a_8;$$

$$tmp1_1 = a_2 - a_6;$$

$$tmp1_2 = a_3 + a_5;$$

$$ttmp_0 = (tmp1_0 - tmp1_1) \cdot c_{10};$$

$$ttmp_1 = (tmp1_2 + tmp1_0) \cdot c_{14};$$

$$ttmp_2 = (tmp1_1 + tmp1_2) \cdot c_2;$$

$$tmp1_0 = ttmp_0 + ttmp_2;$$

$$tmp1_1 = ttmp_1 - ttmp_2;$$

$$\text{temp}_1 \quad = d_{15} \cdot (\ a_1 + a_7);$$

$$\text{temp}_2 \quad = a_1 + a_4;$$

$$\text{temp}_3 \quad = a_7 - a_4;$$

$$\text{tmp2}_0 = \text{temp}_1 + \text{temp}_2;$$

$$\text{tmp2}_1 = \text{temp}_1 + \text{temp}_3;$$

$$\text{temp}_1 \quad = \text{tmp0}_0 + \text{tmp1}_0;$$

$$\text{temp}_2 \quad = \text{tmp0}_1 - \text{tmp1}_1;$$

$$Y_1 = \text{temp}_1 \ + \text{tmp2}_0;$$

$$Y_{13} = \text{temp}_2 \ - \text{tmp2}_0;$$

$$Y_{11} = \text{temp}_1 \ - \text{temp}_2 - \text{tmp2}_0;$$

$$\text{temp}_1 \quad = \text{tmp0}_1 + \text{tmp1}_1;$$

$$\text{temp}_2 \quad = \text{tmp0}_0 - \text{tmp1}_0;$$

$$Y_5 = \text{temp}_1 \quad + \text{tmp2}_1;$$

$$Y_{17} = \text{temp}_2 \quad - \text{tmp2}_1;$$

$$Y_7 = \text{temp}_1 \quad - \text{temp}_2 - \text{tmp2}_1;$$

$$\text{xx}_0 = b_0 - b_8;$$

$$\text{xx}_1 = b_1 - b_7;$$

$$\text{xx2} = b_2 - b_6;$$

$$\text{xx3} = b_3 - b_5;$$

$$Y_6 = (xx_0 - xx_2 - xx_3) \cdot d_6;$$

$$tmp0_0 = (xx_0 + xx_3) \cdot d_2;$$

$$tmp0_1 = (xx_0 + xx_2) \cdot d_{14};$$

$$tmp0_2 = (xx_2 - xx_3) \cdot d_{10};$$

$$tmp_0 = tmp0_0 + tmp0_2;$$

$$ttmp_1 = tmp0_0 - tmp0_1;$$

$$ttmp_2 = tmp0_1 + tmp0_2;$$

$$temp_1 = xx_1 \cdot d_6;$$

$$Y_2 = ttmp_0 + temp_1;$$

$$Y_{10} = ttmp_1 - temp_1;$$

$$Y_{14} = \text{ttmp}_2 - \text{temp}_1;$$

$$\text{xx}_0 = b_0 + b_8;$$

$$\text{xx}_1 = b_1 + b_7;$$

$$\text{xx}_2 = b_2 + b_6;$$

$$\text{xx}_3 = b_3 + b_5;$$

$$\text{tmp1}_0 = (\text{xx}_0 - \text{xx}_2) \cdot d_4;$$

$$\text{tmp1}_1 = (\text{xx}_2 - \text{xx}_3) \cdot d_8;$$

$$\text{tmp1}_2 = (\text{xx}_3 - \text{xx}_0) \cdot d_{16};$$

$$\text{ttmp}_0 = \text{tmp1}_0 + \text{tmp1}_1$$

$$ttmp_1 = tmp1_0 + tmp1_2;$$

$$ttmp_2 = tmp1_1 - tmp1_2$$

$$temp_2 = (xx_1 - b_4 - b_4) \cdot \sqrt{1/2};$$

$$Y_4 = ttmp_0 + temp_2;$$

$$Y_8 = ttmp_1 - temp_2;$$

$$Y_{16} = ttmp_2 - temp_2;$$

$$temp_1 = xx_0 + xx_2 + xx_3;$$

$$temp_2 = xx_1 + b_4;$$

$$Y_0 = (temp_1 + temp_2) \cdot \sqrt{2};$$

$$Y_{12} = (\text{ temp}_1 - \text{temp}_2 - \text{temp}_2 ) \cdot \sqrt{1/2} \ ;$$

As we can see, the above 18-point DCT requires 19 multiplications and 100 additions. It will be appreciated that we may obtain the MDCT coefficients $X_k$ from the DCT coefficients $Y_k$, as described previously.

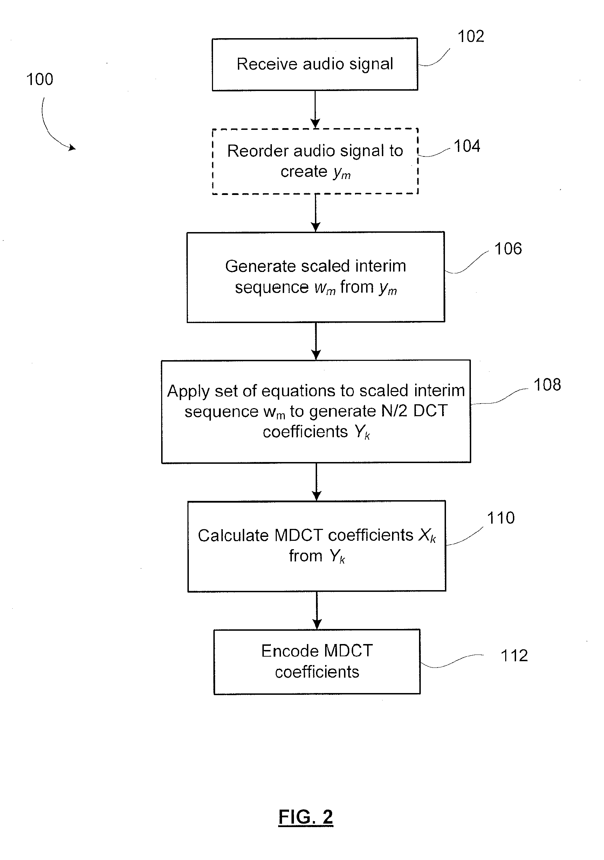

Reference is now made to Figure 2, which shows, in flowchart form, an example method of encoding an audio input sample in accordance with the present application. Keeping in mind the foregoing discussion of example embodiments, it will be appreciated that the method 100 begins with receipt of the audio signal and, in particular, the audio signal containing input sequence $x_m$ in step 102. In step 104, the input sequence $x_m$ is reordered to create the reordered input sequence $y_m$. Step 106 involves the creation of the interim sequence $w_m$, from the reordered input sequence $y_m$. Step 104 is shown in dashed lines to indicate that it is not necessarily present in practical implementations. It is, conceptually, inherent in the calculation of the interim sequence $w_m$, directly from the input sequence $x_m$. Accordingly, steps 104 and 106 may be understood to be calculation of the interim sequence $w_m$ from the input sequence $x_m$.

In step 108, the set of equations for finding the DCT coefficients $Y_k$ is applied to the interim sequence $w_m$. In step 110, the MDCT coefficients $X_k$ are obtained from the DCT coefficients $Y_k$. Following step 110, in step 112 the MDCT coefficients $X_k$ are encoded. Step 112 may include quantization and entropy coding. In some embodiments, the encoding accords with MPEG Layer 3.

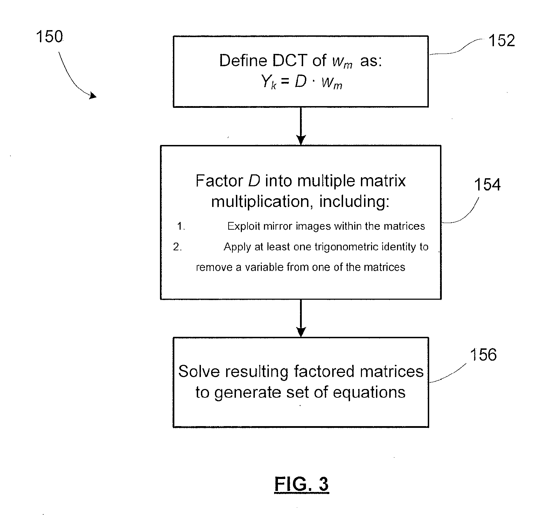

Step 108 indicates that a set of equations is to be used to find the DCT coefficients $Y_k$. Reference is now made to Figure 3, which shows a method 150 of obtaining the set of equations applied in Step 108 of the method 100 of Figure 2.

The method 150 of Figure 3 includes defining the DCT of the interim sequence $w_m$ as: $Y_k = D \cdot w_m$ in step 152. The DCT transform matrix D is then factored into a multiple matrix multiplication in step 154. The factorization includes simplifying operations such as exploiting mirror images within the matrices to further factor the expression of D, and applying at least one trigonometric identity to remove at least one variable from at least one of the matrices. As illustrated above in connection with example N=12 and example N=36, this factorization aids in simplifying the expression of the DCT transform matrix D to a degree that fewer multiplication and additions are required to implement the DCT process.

In step 156, the resulting multiplication of matrices defining the DCT coefficients $X_k$ is solved to generate the set of equations.

**Inverese MDCT**

The inverse MDCT may be expressed as follows:

$$\hat{x}_m = \sum_{k=0}^{N/2-1} X_k \cdot \cos[\frac{\pi}{2N}(2k+1)(2m+1+\frac{N}{2})], \quad m = 0,1,\cdots,N-1. \tag{39}$$

It may be shown that the inverse MDCT has the following properties:

$$1)\ \hat{x}_{\frac{N}{2}-1-m} = -\hat{x}_m, \qquad m=0,\cdots\frac{N}{4}-1\ ;$$

$$2)\ \hat{x}_{\frac{N}{2}+m} = -\hat{x}_{N-1-m}, \qquad m=0,\cdots\frac{N}{4}-1\ .$$

Therefore we only need to compute inverse MDCT for N/2 points:

Define t = m - (N/4), N/4 ≤ m ≤ (3N/4)-1, 0 ≤ t ≤ (N/2)-1.

Define:

$$\tilde{x}_t = \sum_{k=0}^{N/2-1} X_k \cdot \cos[\frac{\pi}{2N}(2k+1)(2t+1)], \quad t = 0,1,\cdots,N-1. \qquad (40)$$

We have

$$\hat{x}_{\frac{N}{2}+t} = \tilde{x}_t .$$

It will be appreciated that Equation (40) is similar to Equation (4). Therefore, following a similar approach as described above in connection with the forward MDCT, we may obtain a fast algorithm for inverse MDCT. Note that the N/2 additions in Equation (4) does not exist in the inverse MDCT.

## Complexity Analysis

Equation (6) involves N/2 multiplications and additions. Equation (7) involves N/2-1 multiplications. Based on the embodiments described above, the total number of multiplications and additions for 12-point forward MDCT is 10 and 29 respectively. The total number of multiplications and additions for 36-point forward MDCT are 37 and 135 respectively.

Table 1 below gives a comparison of the computational complexity of the proposed fast MDCT process described above, for the 12-point and 36-point embodiments and two known processes. The two known processes are Lee's algorithm described in S.-W. Lee, "Improved algorithm for efficient computation of the forward and backward MDCT in MPEG audio coder", IEEE Transactions on Circuits and Systems-II: Analog and Digital Signal Processing, Vol. 48, No. 10, pp. 990-994, Oct. 2000, and Britanak's algorithm described in V. Britanak and K. R. Rao, "An efficient implementation of the forward and inverse MDCT in MPEG Audio Coding", IEEE Signal Processing Letters, Vol. 8, No. 2, pp. 48-51, Feb. 2001; and V. Britanak and K. R. Rao, "A new fast algorithm for the unified forward and inverse MDCT/MDST computation", Signal Processing Letters, Vol. 82, pp. 433-459, 2002. It will be appreciated that the proposed algorithm has lower computational complexity for both forward and inverse MDCT.

Table 1: Complexity comparison

| Total number of Multiplication/Addition | Length N=12 Multiplication/Addition | Length N=36 Multiplication/Addition |
|---|---|---|
| Britanik's algorithm [6] | 13/39 - Forward MDCT<br>13/33 - Inverse MDCT | 47/165 - Forward MDCT<br>47/151 - Inverse MDCT |
| Lee's algorithm [5] | 11/29 - Forward MDCT<br>11/23 - Inverse MDCT | 43/133 - Forward MDCT<br>43/115 - Inverse MDCT |
| The proposed algorithm | 10/29 - Forward MDCT<br>10/23 - Inverse MDCT | 37/135 - Forward MDCT<br>37/117 - Inverse MDCT |

## Windowing

In some embodiments, the multiplication coefficient $\dfrac{1}{2\sqrt{2}\cos(\dfrac{\pi}{N}\dfrac{2m+1}{2})}$ in Equation (8) can be merged into the windowing step of MP3 audio coding. Along with windowing, the forward MDCT could be expressed as

$$X_k = \sum_{m=0}^{N-1} x_m \cdot v_m \cos\left[\frac{\pi}{2N}(2k+1)(2m+1+\frac{N}{2})\right], k = 0,1,\cdots \frac{N}{2} - 1 \qquad (41)$$

where $v_m$ is a windowing sequence with a length N for the input sequence $x_m$. It will be appreciated that the multiplication coefficient $\dfrac{1}{2\sqrt{2}\cos(\dfrac{\pi}{N}\dfrac{2m+1}{2})}$ could be premultiplied with $v_m$ to form a scaled windowing sequence, which removes N/2 multiplications in MDCT. Therefore, the total number of multiplications in 12-point MDCT and inverse MDCT for the proposed algorithm is reduced to 4, and the total number of multiplications in 36-point MDCT and inverse MDCT for the proposed algorithm is reduced to 19.

It will be understood that the calculation of the interim sequence $w_m$ directly from the input sequence $x_m$, will make the values of $w_m$ dependent upon two values of the input sequence $x_m$. For example, for N=12, if the values $x_m$ are pre-scaled by the multiplication coefficient, then we get the following relations:

$$w_0 = -x_9 - x_8;$$

$$w_1 = -x_{10} - x_7;$$

$$w_2 = -x_{11} - x_6;$$

$$w_3 = x_0 - x_5;$$

$$w_4 = x_1 - x_4;$$

$$w_5 = x_2 - x_3;$$

To extract the multiplication coefficient from the calculation of $w_m$ and perform it during the windowing operation, it will be appreciated that the multiplication coefficient applied to each element of $x_m$ at the windowing stage will need to reflect the index of the interim sequence for which that element is going to be used. For example, elements $x_9$ and

$x_8$ are scaled by the multiplication coefficient with m = 0 in the denominator.

As can be seen from the foregoing, the interim sequence is defined as a scaled sequence of length N/2 where each element is based on the difference between two of the elements in the input sequence. The scaling is then extracted from the calculation of the interim sequence and applied directly to the elements of the input sequence during the windowing operation to substantially reduce the number of multiplications required. This improvement is equally applicable to other N/2 DCT-based fast MDCT processes, such as that disclosed by Lee in S.-W. Lee, "Improved algorithm for efficient computation of the forward and backward MDCT in MPEG audio coder", IEEE Transactions on Circuits and Systems-II: Analog and Digital Signal Processing, Vol. 48, No. 10, pp. 990-994, Oct. 2000.

The foregoing description presents various methods and processes for developing a set of equations or calculations for realizing MDCT coefficients from an input sequence by factoring a matrix-based expression of a DCT transform matrix. It will be appreciated that the resulting set of MDCT equations (or inverse MDCT equations) may be used in transforming any input sequence into the MDCT spectral coefficients (or vice versa). It is particularly applicable to transforming audio input sequences in an encoding/compression or decoding/decompression process. It will also be appreciated that the process may be implemented on any suitably programmed general purpose computer, processor, ASIC, digital signal processor (DSP), etc. The programming of such a device to apply the set of equations to an input sequence will be within the understanding of a person of ordinary skill in the art having regard to the foregoing description.

By way of example, reference is now made to Figure 4, which shows an example embodiment of an encoder 200. The encoder 200 may include a processor 202 and memory 204. The memory 204 may have stored therein an audio encoding module 206 executable by the processor 202 and containing program instructions suitable for configuring the processor 202 to perform one or more of the encoding processes described herein. The encoder 200 may include an input port 208 or other suitable communications interface for receiving input audio data and outputting encoded data.

Certain adaptations and modifications of the described embodiments can be made. Therefore, the above discussed embodiments are considered to be illustrative and not restrictive.

**Claims**

1. A method of encoding an audio signal using a modified discrete cosine transform (MDCT), the method comprising:

   receiving the audio signal (102), the audio signal including an input sequence of length N;
   calculating (106) a scaled interim sequence as a function of the input sequence;
   calculating (108) an output sequence of discrete cosine transform (DCT) coefficients by performing an N/2-point DCT of the scaled interim sequence by applying to the scaled interim sequence a set of equations derived by factoring (154) a DCT transform matrix into a multiplication of at least three matrices and performing at least one simplifying operation;
   calculating (110) the MDCT coefficients of the input sequence from the DCT coefficients; and
   encoding (112) the MDCT coefficients.

2. The method claimed in claim 1, wherein performing at least one simplifying operation includes factoring one of the at least three matrices based on at least one mirror image of elements within the one of the at least three matrices.

3. The method claimed in claim 1 or claim 2, wherein performing at least one simplifying operation includes eliminating a variable from elements within one of the at least three matrices using at least one trigonometric identity.

4. The method claimed in any one of claims 1 to 3, wherein factoring includes factoring a submatrix within one of the at least three matrices.

5. The method claimed in any one of claims 1 to 4, wherein the encoding comprises MPEG Layer 3 encoding.

6. The method claimed in any one of claims 1 to 5, further including applying a window sequence to the input sequence in a windowing operation prior to calculating the scaled interim sequence, and wherein each element of the scaled interim sequence is calculated as a difference between two elements of the input sequence multiplied by an indexed coefficient, and wherein the multiplication of the indexed coefficient is incorporated into the window sequence and applied during the windowing operation.

7. The method claimed in any one of claims 1 to 6, wherein the input sequence comprises $x_m$, $m = 0, 1, ..., N-1$; wherein a reordered input sequence $y_m$, $m=0,1,...,N-1$, comprises:

$$y_m = \begin{cases} -x_{m+(3N/4)}, & m = 0,1,\cdots,\dfrac{N}{4}-1 \\[2ex] x_{m-(N/4)}, & m = \dfrac{N}{4}, \dfrac{N}{4}+1,\cdots N-1 \end{cases}$$

wherein the scaled interim sequence $w_m$, $m=0,1,...,N/2-1$, comprises:

$$w_m = (y_m - y_{N-1-m})\frac{1}{2\sqrt{2}\cos(\dfrac{\pi}{N}\dfrac{2m+1}{2})}$$

wherein the N/2-point DCT coefficients $Y_k$ of the scaled interim sequence comprise:

$$Y_k = \sum_{m=0}^{N/2-1} w_m \sqrt{2}\cos[\frac{\pi}{N}k(2m+1)], \qquad k = 0,1,\cdots\frac{N}{2}-1;$$

and wherein the MDCT coefficients $X_k$ comprise:

$$X_k = Y_k + Y_{k+1}.$$

8. The method claimed in claim 7, wherein N=12 and the set of equations comprise:

$$Y_0 = \sqrt{2}\cdot(z_1 + a_1),$$

$$Y_1 = z_2 + a_4 + a_5,$$

$$Y_2 = d_2 \cdot (a_0 - a_2),$$

$$Y_3 = a_5 - a_4 - a_3,$$

$$Y_4 = \sqrt{1/2}\cdot(z_1 - a_1 - a_1),$$

$$Y_5 = z_2 + a_3 - a_4,$$

in which $a_0 = w_0 + w_5$, $a_5 = w_0 - w_5$, $a_1 = w_1 + w_4$, $a_4 = w_1 - W4$, $a_2 = w_2 + w_3$, $a_3 = w_2 - w_3$, $z_1 = a_0 + a_2$; and $z_2 = d_5\cdot(a_3 + a_5)$, and

$$d_k = \sqrt{2}\cos(\frac{k}{12}\pi).$$

9. The method claimed in claim 7, wherein N=36 and the set of equations comprise:

$$a_0 = w_0 - w_{17}; \qquad b_0 = w_0 + w_{17};$$

$$a_1 = w_1 - w_{16}; \qquad b_1 = w_1 + w_{16};$$

$$a_2 = w_2 - w_{15}; \qquad b_2 = w_2 + w_{15};$$

$$a_3 = w_3 - w_{14}; \qquad b_3 = w_3 + w_{14};$$

$$a_4 = w_4 - w_{13}; \qquad b_4 = w_4 + w_{13};$$

$$a_5 = w_5 - w_{12}; \qquad b_5 = w_5 + w_{12};$$

$$a_6 = w_6 - w_{11}; \qquad b_6 = w_6 + w_{11};$$

$$a_7 = w_7 - w_{10}; \qquad b_7 = w_7 + w_{10};$$

$$a_8 = w_8 - w_9; \qquad b_8 = w_8 + w_9;$$

$$t0_0 = a_0 - a_5 - a_6;$$

$$t0_1 = a_1 - a_4 - a_7;$$

$$t0_2 = a_2 - a_3 - a_8;$$

$$Y_9 = t0_0 - t0_1 - t0_2;$$

$$z = (t0_0 + t0_2) \cdot d_{15};$$

$$Y_3 = z + t0_0 + t0_1;$$

$$Y_{15} = z + t0_2 - t0_1;$$

$$tmp0_0 = a_0 + a_8;$$

$$tmp0_1 = a_2 + a_6;$$

$$tmp0_2 = a_3 - a_5;$$

$$ttmp_0 = (tmp0_0 + tmp0_1) \cdot c_4;$$

(continued)

$$ttmp_1 = (tmp0_2 - tmp0_0) \cdot c_{16};$$

$$ttmp_2 = (tmp0_1 + tmp0_2) \cdot c_8;$$

$$tmp0_0 = ttmp_0 + ttmp_1;$$

$$tmp0_1 = ttmp_0 - ttmp_2;$$

$$tmp1_0 = a_0 - a_8;$$

$$tmp1_1 = a_2 - a_6;$$

$$tmp1_2 = a_3 + a_5;$$

$$ttmp_0 = (tmp1_0 - tmp1_1) \cdot c_{10};$$

$$ttmp_1 = (tmp1_2 + tmp1_0) \cdot c_{14};$$

$$ttmp_2 = (tmp1_1 + tmp1_2) \cdot c_2;$$

$$tmp1_0 = ttmp_0 + ttmp_2;$$

$$tmp1_1 = ttmp_1 - ttmp_2;$$

$$temp_1 = d_{15} \cdot (a_1 + a_7);$$

$$temp_2 = a_1 + a_4;$$

$$temp_3 = a_7 - a_4;$$

$$tmp2_0 = temp_1 + temp_2;$$

$$tmp2_1 = temp_1 + temp_3;$$

$$temp_1 = tmp0_0 + tmp1_0;$$

$$temp_2 = tmp0_1 - tmp1_1;$$

$$Y_1 = temp_1 + tmp2_0;$$

$$Y_{13} = temp_2 - tmp2_0;$$

$$Y_{11} = temp_1 - temp_2 - tmp2_0;$$

(continued)

$$temp_1 = tmp0_1 + tmp1_1;$$

$$temp_2 = tmp0_0 - tmp1_0;$$

$$Y_5 = temp_1 + tmp2_1;$$

$$Y_{17} = temp_2 - tmp2_1;$$

$$Y_7 = temp_1 - temp_2 - tmp2_1;$$

$$xx_0 = b_0 - b_8;$$

$$xx_1 = b_1 - b_7;$$

$$xx2 = b_2 - b_6;$$

$$xx3 = b_3 - b_5;$$

$$Y_6 = (xx_0 - xx_2 - xx_3) \cdot d_6;$$

$$tmp0_0 = (xx_0 + xx_3) \cdot d_2;$$

$$tmp0_1 = (xx_0 + xx_2) \cdot d_{14};$$

$$tmp0_2 = (xx_2 - xx_3) \cdot d_{10};$$

$$tmp_0 = tmp0_0 + tmp0_2;$$

$$ttmp_1 = tmp0_0 - tmp0_1;$$

$$ttmp_2 = tmp0_1 + tmp0_2;$$

$$temp_1 = xx_1 \cdot d_6;$$

$$Y_2 = ttmp_0 + temp_1;$$

$$Y_{10} = ttmp_1 - temp_1;$$

$$Y_{14} = ttmp_2 - temp_1;$$

$$xx_0 = b_0 + b_8;$$

$$xx_1 = b_1 + b_7;$$

$$xx_2 = b_2 + b_6;$$

EP 2 224 431 A1

(continued)

$$xx_3 = b_3 + b_5;$$

$$tmp1_0 = (xx_0 - xx_2) \cdot d_4;$$

$$tmp1_1 = (xx_2 - xx_3) \cdot d_8;$$

$$tmp1_2 = (xx_3 - xx_0) \cdot d_{16};$$

$$ttmp_0 = tmp1_0 + tmp1_1$$

$$ttmp_1 = tmp1_0 + tmp1_2;$$

$$ttmp_2 = tmp1_1 - tmp1_2$$

$$temp_2 = (xx_1 - b_4 - b_4) \cdot \sqrt{1/2};$$

$$Y_4 = ttmp_0 + temp_2;$$

$$Y_8 = ttmp_1 - temp_2;$$

$$Y_{16} = ttmp_2 - temp_2;$$

$$temp_1 = xx_0 + xx_2 + xx_3;$$

$$temp_2 = xx_1 + b_4;$$

$$Y_0 = ( temp_1 + temp_2 ) \cdot \sqrt{2};$$

$$Y_{12} = ( temp_1 - temp_2 - temp_2 ) \cdot \sqrt{1/2},$$

wherein $d_k = \sqrt{2}\cos(\dfrac{k}{12}\pi)$ and $c_k = \cos(\dfrac{k}{36}\pi)$.

10. An encoder (200) for encoding an audio signal using a modified discrete cosine transform (MDCT), the encoder comprising:

   a processor (202);
   memory (204);
   an input port (208) for receiving the audio signal, the audio signal including an input sequence of length N; and
   an audio encoding module (206) stored in memory (204) and containing instructions for configuring the processor (202) to perform the method claimed in any one of claims 1 to 9.

11. A method of encoding an audio signal using a 12-point modified discrete cosine transform (MDCT), the method comprising:

**45**

receiving the audio signal, the audio signal including a data sequence $x_m$, m=0,1,...,11;
calculating a sequence of DCT coefficients $Y_k$ as a 6-point DCT of a transformed sequence $w_m$ derived from the data sequence $x_m$, in which the transformed sequence $w_m$ is defined as

$$w_m = (y_m - y_{11-m})\frac{1}{2\cos(\frac{\pi}{12}\frac{2m+1}{2})}, \quad m = 0,1,\ldots,5,$$

and in which a reordered input sequence $y_m$ is defined as

$$y_m = \begin{cases} -x_{m+9}, & m = 0,1,2 \\ x_{m-3}, & m = 3,4,\ldots,11 \end{cases}$$

calculating the MDCT coefficients $X_k$ of the data sequence $x_m$ from the DCT coefficients $Y_k$ based on the relation $X_k = Y_k + Y_{k+1}$, k=0,1,...,5; and

encoding the MDCT coefficients $X_k$,
wherein calculating the sequence of DCT coefficients includes determining the DCT coefficients in accordance with the following expressions,

$$Y_0 = \sqrt{2} \cdot (z_1 + a_1),$$

$$Y_1 = z_2 + a_4 + a_5,$$

$$Y_2 = d_2 \cdot (a_0 - a_2),$$

$$Y_3 = a_5 - a_4 - a_3,$$

$$Y_4 = \sqrt{1/2} \cdot (z_1 - a_1 - a_1),$$

$$Y_5 = z_2 + a_3 - a_4,$$

in which $a_0 = w_0 + W_5$, $a_5 = w_0 - w_5$, $a_1 = w_1 + W_4$, $a_4 = w_1 - W4$, $a_2 = w_2 + w_3$ $a_3 = w_2 - w_3$, $z_1 = a_0 + a_2$; and $z_2 = d_5 \cdot (a_3 + a_5)$.

12. A method of encoding an audio signal using a modified discrete cosine transform (MDCT), the method comprising:

receiving the audio signal, the audio signal including a data sequence;
multiplying the data sequence by a windowing sequence to create a windowed data sequence of length N;
calculating a scaled interim sequence of length N/2 as a function of the windowed data sequence;
performing an N/2-point DCT of the scaled interim sequence to create an output sequence of DCT coefficients;
calculating the MDCT coefficients of the data sequence from the DCT coefficients; and
encoding the MDCT coefficients,

wherein the each element of the scaled interim sequence is a difference between two elements of the data sequence multiplied by an indexed coefficient, and
wherein the indexed coefficient is incorporated into the window sequence and applied when multiplying the data sequence by the windowing sequence.

**13.** The method claimed in claim 12, wherein the scaled interim sequence $w_m$ is defined as:

$$w_m = (y_m - y_{N-1-m}) \frac{1}{2\cos(\frac{\pi}{N} \frac{2m+1}{2})} , \; m=0,1,\ldots N/2-1,$$

and wherein

$$y_m = \begin{cases} -x_{m+(3N/4)}, & m = 0,1,\cdots,\frac{N}{4}-1 \\ x_{m-(N/4)}, & m = \frac{N}{4},\frac{N}{4}+1,\cdots N-1 \end{cases},$$

and wherein $x_m$ comprises the data sequence.

**14.** The method claimed in claim 12, wherein multiplying the data sequence by the windowing sequence comprises multiplying the data sequence by the windowing sequence element-by-element, and wherein each element of the windowing sequence incorporates the indexed coefficient.

**Amended claims in accordance with Rule 137(2) EPC.**

**1.** A method of encoding an audio signal using a modified discrete cosine transform (MDCT), the method comprising:

receiving the audio signal (102), the audio signal including an input sequence of length N;
calculating (106) a scaled interim sequence as a function of the input sequence, wherein the scaled interim sequence is an interim sequence scaled by $1/\sqrt{2}$; calculating (108) an output sequence of discrete cosine transform (DCT) coefficients by performing an N/2-point DCT of the scaled interim sequence by applying to the scaled interim sequence a set of equations derived by factoring (154) a DCT transform matrix into a multiplication of at least three matrices and performing at least one simplifying operation, wherein the N/2-point DCT is a type-II DCT scaled by $\sqrt{2}$; calculating (110) the MDCT coefficients of the input sequence from the DCT coefficients; and
encoding (112) the MDCT coefficients.

**2.** The method claimed in claim 1, wherein performing at least one simplifying operation includes factoring one of the at least three matrices based on at least one mirror image of elements within the one of the at least three matrices.

**3.** The method claimed in claim 1 or claim 2, wherein performing at least one simplifying operation includes eliminating a variable from elements within one of the at least three matrices using at least one trigonometric identity.

**4.** The method claimed in any one of claims 1 to 3, wherein factoring includes factoring a submatrix within one of the at least three matrices.

**5.** The method claimed in any one of claims 1 to 4, wherein the encoding comprises MPEG Layer 3 encoding.

6. The method claimed in any one of claims 1 to 5, further including applying a window sequence to the input sequence in a windowing operation prior to calculating the scaled interim sequence, and wherein each element of the scaled interim sequence is calculated as a difference between two elements of the input sequence multiplied by an indexed coefficient, and wherein the multiplication of the indexed coefficient is incorporated into the window sequence and applied during the windowing operation.

7. The method claimed in any one of claims 1 to 6, wherein the input sequence comprises $x_m$, $m = 0,1, ..., N-1$; wherein a reordered input sequence $y_m$, $m=0,1,...,N-1$, comprises:

$$y_m = \begin{cases} -x_{m+(3N/4)}, & m = 0,1,\cdots,\frac{N}{4}-1 \\ x_{m-(N/4)}, & m = \frac{N}{4},\frac{N}{4}+1,\cdots N-1 \end{cases}$$

wherein the scaled interim sequence $w_m$, $m=0,1,..., N/2 -1$, comprises:

$$w_m = (y_m - y_{N-1-m})\frac{1}{2\sqrt{2}\cos(\frac{\pi}{N}\frac{2m+1}{2})}$$

wherein the N/2-point DCT coefficients $Y_k$ of the scaled interim sequence comprise:

$$Y_k = \sum_{m=0}^{N/2-1} w_m \sqrt{2}\cos[\frac{\pi}{N}k(2m+1)], \quad k = 0,1,\cdots\frac{N}{2}-1;$$

and wherein the MDCT coefficients $X_k$ comprise:

$$X_k = Y_k + Y_{k+1}.$$

8. The method claimed in claim 7, wherein N=12 and the set of equations comprise:

$$Y_0 = \sqrt{2} \cdot (z_1 + a_1),$$

$$Y_1 = z_2 + a_4 + a_5,$$

$$Y_2 = d_2 \cdot (a_0 - a_2),$$

$$Y_3 = a_5 - a_4 - a_3,$$

$$Y_4 = \sqrt{1/2} \cdot (z_1 - a_1 - a_1),$$

$$Y_5 = z_2 + a_3 - a_4,$$

in which $a_0 = w_0 + w_5$, $a_5 = w_0 - w_5$, $a_1 = w_1 + w_4$, $a_4 = w_1 - w_4$, $a_2 = w_2 + w_3$, $a_3 = w_2 - w_3$, $z_1 = a_0 + a_2$; and $z_2 = d_5 \cdot (a_3 + a_5)$, and

$$d_k = \sqrt{2}\cos(\frac{k}{12}\pi).$$

9. The method claimed in claim 7, wherein N=36 and the set of equations comprise:

$$a_0 = w_0 - w_{17};$$

$$a_1 = w_1 - w_{16};$$

$$a_2 = w_2 - w_{15};$$

$$a_3 = w_3 - w_{14};$$

$$a_4 = w_4 - w_{13};$$

$$a_5 = w_5 - w_{12};$$

$$a_6 = w_6 - w_{11};$$

$$a_7 = w_7 - w_{10};$$

$$a_8 = w_8 - w_9;$$

$$t0_0 = a_0 - a_5 - a_6;$$

$$t0_1 = a_1 - a_4 - a_7;$$

$$t0_2 = a_2 - a_3 - a_8;$$

$$Y_9 = t0_0 - t0_1 - t0_2;$$

$$z = (t0_0 + t0_2) \cdot d_{15};$$

$$Y_3 = z + t0_0 + t0_1;$$

$$Y_{15} = z + t0_2 - t0_1;$$

$$tmp0_0 = a_0 + a_8;$$

$$tmp0_1 = a_2 + a_6;$$

$$tmp0_2 = a_3 - a_5;$$

$$b_0 = w_0 + w_{17};$$

$$b_1 = w_1 + w_{16};$$

$$b_2 = w_2 + w_{15};$$

$$b_3 = w_3 + w_{14};$$

$$b_4 = w_4 + w_{13};$$

$$b_5 = w_5 + w_{12};$$

$$b_6 = w_6 + w_{11};$$

$$b_7 = w_7 + w_{10};$$

$$b_8 = w_8 + w_9;$$

$$ttmp_0 = (tmp0_0 + tmp0_1) \cdot c_4;$$
$$ttmp_1 = (tmp0_2 - tmp0_0) \cdot c_{12};$$

$$ttmp_2 = (tmp0_1 + tmp0_2) \cdot c_8;$$

$$tmp0_0 = ttmp_0 + ttmp_1;$$

$$tmp0_1 = ttmp_0 - ttmp_2;$$

$$tmp1_0 = a_0 - a_8;$$

$$tmp1_1 = a_2 - a_6;$$

$$tmp1_2 = a_3 + a_5;$$

$$ttmp_0 = (tmp1_0 - tmp1_1) \cdot c_{16};$$

$$ttmp_1 = (tmp1_2 + tmp1_0) \cdot c_{12};$$

$$ttmp_2 = (tmp1_1 + tmp1_2) \cdot c_2;$$

$$tmp1_0 = ttmp_0 + ttmp_2;$$

$$tmp1_1 = ttmp_1 - ttmp_2;$$

$$\text{temp}_1 = d_{15} \cdot (a_1 + a_7);$$

$$\text{temp}_2 = a_1 + a_4;$$

$$\text{temp}_3 = a_7 - a_4;$$

$$\text{tmp2}_0 = \text{temp}_1 + \text{temp}_2;$$

$$\text{tmp2}_1 = \text{temp}_1 + \text{temp}_3;$$

$$\text{temp}_1 = \text{tmp0}_0 + \text{tmp1}_0;$$

$$\text{temp}_2 = \text{tmp0}_1 - \text{tmp1}_1;$$

$$Y_1 = \text{temp}_1 + \text{tmp2}_0;$$

$$Y_{13} = \text{temp}_2 - \text{tmp2}_0;$$

$$Y_{11} = \text{temp}_1 - \text{temp}_2 - \text{tmp2}_0;$$

$$\text{temp}_1 = \text{tmp0}_1 + \text{tmp1}_1;$$

$$\text{temp}_2 = \text{tmp0}_0 - \text{tmp1}_0;$$

$$Y_5 = \text{temp}_1 + \text{tmp2}_1;$$

$$Y_{17} = \text{temp}_2 - \text{tmp2}_1;$$

$$Y_7 = \text{temp}_1 - \text{temp}_2 - \text{tmp2}_1;$$

$$xx_0 = b_0 - b_8;$$

$$xx_1 = b_1 - b_7;$$

$$xx2 = b_2 - b_6;$$

$$xx3 = b_3 - b_5;$$

$$Y_6 = (xx_0 - xx_2 - xx_3) \cdot d_6;$$

$$\text{tmp0}_0 = (xx_0 + xx_2) \cdot d_2;$$

$$\text{tmp0}_1 = (xx_0 + xx_2) \cdot d_{14};$$

$$tmp0_2 = (xx_2 - xx_3) \cdot d_{10};$$

$$tmp_0 = tmp0_0 + tmp0_2;$$

$$ttmp_1 = tmp0_0 - tmp0_1;$$

$$ttmp_2 = tmp0_1 + tmp0_2;$$

$$temp_1 = xx_1 \cdot d_2;$$

$$Y_2 = ttmp_0 + temp_1;$$

$$Y_{10} = ttmp_1 - temp_1;$$

$$Y_{14} = ttmp_2 - temp_1;$$

$$xx_0 = b_0 + b_8;$$

$$xx_1 = b_1 + b_7;$$

$$xx_2 = b_2 + b_6;$$

$$xx_3 = b_3 + b_5;$$

$$tmp1_0 = (xx_0 - xx_2) \cdot d_4;$$

$$tmp1_1 = (xx_2 - xx_3) \cdot d_8;$$

$$tmp1_2 = (xx_3 - xx_0) \cdot d_{16};$$

$$ttmp_0 = tmp1_0 + tmp1_1$$

$$ttmp_1 = tmp1_0 + tmp1_2;$$

$$ttmp_2 = tmp1_1 - tmp1_2$$

$$temp_2 = (xx_1 - b_4 - b_4) \cdot \sqrt{1/2};$$

$$Y_4 = ttmp_0 + temp_2;$$

$$Y_8 = ttmp_1 - temp_2;$$

$$Y_{16} = ttmp_2 - temp_2;$$

$$temp_1 = xx_0 + xx_2 + xx_3;$$

$$temp_2 = xx_1 + b_4;$$

$$Y_0 = (temp_1 + temp_2) \cdot \sqrt{2};$$

$$Y_{12} = (temp_1 - temp_2 - temp_2) \cdot \sqrt{1/2},$$

wherein

$$d_k = \sqrt{2}\cos(\frac{k}{12}\pi) \text{ and } c_k = \cos(\frac{k}{36}\pi).$$

**10.** An encoder (200) for encoding an audio signal using a modified discrete cosine transform (MDCT), the encoder comprising:

a processor (202);
memory (204);
an input port (208) for receiving the audio signal, the audio signal including an input sequence oflength N; and
an audio encoding module (206) stored in memory (204) and containing instructions for configuring the processor (202) to perform the method claimed in any one of claims 1 to 9.

**11.** A method of encoding an audio signal using a 12-point modified discrete cosine transform (MDCT), the method comprising:

receiving the audio signal, the audio signal including a data sequence $x_m$, $m=0,1,...,11$;
calculating a sequence of DCT coefficients $Y_k$ as a 6-point DCT of a transformed sequence $w_m$ derived from the data sequence $x_m$, in which the transformed sequence $w_m$ is defined as

$$w_m = (y_m - y_{11-m}) \frac{1}{2\sqrt{2}\cos(\frac{\pi}{12}\frac{2m+1}{2})}, \quad m = 0,1,\ldots,5,$$

and in which a reordered input sequence $y_m$ is defined as

$$y_m = \begin{cases} -x_{m+9}, & m = 0,1,2 \\ x_{m-3}, & m = 3,4,\ldots,11 \end{cases}$$

calculating the MDCT coefficients $X_k$ of the data sequence $x_m$ from the DCT coefficients $Y_k$ based on the relation $X_k = Y_k + Y_{k+1}$, k=0,1,...,5; and
encoding the MDCT coefficients $X_k$,
wherein calculating the sequence of DCT coefficients includes determining the DCT coefficients in accordance with the following expressions,

$$Y_0 = \sqrt{2} \cdot (z_1 + a_1),$$

$$Y_1 = z_2 + a_4 + a_5,$$

$$Y_2 = d_2 \cdot (a_0 - a_2),$$

$$Y_3 = a_5 - a_4 - a_3,$$

$$Y_4 = \sqrt{1/2} \cdot (z_1 - a_1 - a_1),$$

$$Y_5 = z_2 + a_3 - a_4,$$

in which $a_0 = w_0 + w_5$, $a_5 = w_0 - w_5$, $a_1 = w_1 + w_4$, $a_4 = w_1 - w_4$, $a_2 = w_2 + w_3$, $a_3 = w_2 - w_3$, $z_1 = a_0 + a_2$; and $z_2 = d_5 \cdot (a_3 + a_5)$.

**12.** A method of encoding an audio signal using a modified discrete cosine transform (MDCT), the method comprising:

receiving the audio signal, the audio signal including a data sequence;
multiplying the data sequence by a windowing sequence to create a windowed data sequence of length N;
calculating a scaled interim sequence of length N/2 as a function of the windowed data sequence, wherein the scaled interim sequence includes a scaling factor of $1/\sqrt{2}$ ;;
performing an N/2-point DCT of the scaled interim sequence to create an output sequence of DCT coefficients, wherein the N/2-point DCT is a type-II DCT scaled by $\sqrt{2}$ ;
calculating the MDCT coefficients of the data sequence from the DCT coefficients; and
encoding the MDCT coefficients,
wherein the each element of the scaled interim sequence is a difference between two elements of the data sequence multiplied by an indexed coefficient, and
wherein the indexed coefficient is incorporated into the window sequence and applied when multiplying the data sequence by the windowing sequence.

**13.** The method claimed in claim 12, wherein the scaled interim sequence $w_m$ is defined as:

$$w_m = (y_m - y_{N-1-m}) \frac{1}{2\sqrt{2}\cos(\frac{\pi}{N}\frac{2m+1}{2})}, \ m=0,1,\ldots N/2-1,$$

and wherein

$$y_m = \begin{cases} -x_{m+(3N/4)}, & m = 0,1,\cdots,\frac{N}{4}-1 \\ x_{m-(N/4)}, & m = \frac{N}{4},\frac{N}{4}+1,\cdots N-1 \end{cases},$$

and wherein $x_m$ comprises the data sequence.

**14.** The method claimed in claim 12, wherein multiplying the data sequence by the windowing sequence comprises multiplying the data sequence by the windowing sequence element-by-element, and wherein each element of the windowing sequence incorporates the indexed coefficient.

20

| 24 | Time/Frequency Mapping |

Audio input
22

28 Quantization & Entropy Coding

30 Frame Packing

Encoded output
32

26 Psychoacoustic Model

## FIG. 1

200

204

Encoder

208

Processor

Memory

Audio Encoding Module

202

206

## FIG. 4

100

```
         ┌────────────────────────────┐    ⌐ 102
         │    Receive audio signal     │
         └────────────────────────────┘
                       │
                       ▼
         ┌ ─ ─ ─ ─ ─ ─ ─ ─ ─ ─ ─ ─ ─┐    ⌐ 104
         │   Reorder audio signal to  │
         │        create $y_m$        │
         └ ─ ─ ─ ─ ─ ─ ─ ─ ─ ─ ─ ─ ─┘
                       │
                       ▼
         ┌────────────────────────────┐    ⌐ 106
         │     Generate scaled interim │
         │   sequence $w_m$ from $y_m$ │
         └────────────────────────────┘
                       │
                       ▼
         ┌────────────────────────────┐    ⌐ 108
         │ Apply set of equations to scaled interim│
         │ sequence $w_m$ to generate N/2 DCT      │
         │ coefficients $Y_k$                      │
         └────────────────────────────┘
                       │
                       ▼
         ┌────────────────────────────┐    ⌐ 110
         │ Calculate MDCT coefficients $X_k$│
         │        from $Y_k$           │
         └────────────────────────────┘
                       │
                       ▼
         ┌────────────────────────────┐    ⌐ 112
         │      Encode MDCT            │
         │      coefficients          │
         └────────────────────────────┘
```

**FIG. 2**

150

Define DCT of $w_m$ as:
$$Y_k = D \cdot w_m$$

152

Factor $D$ into multiple matrix multiplication, including:

1.        Exploit mirror images within the matrices

2.        Apply at least one trigonometric identity to remove a variable from one of the matrices

154

Solve resulting factored matrices to generate set of equations

156

**FIG. 3**

Europäisches
Patentamt

European
Patent Office

Office européen
des brevets

# EUROPEAN SEARCH REPORT

Application Number

EP 09 15 3723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MU-HUO CHENG ET AL: "Fast IMDCT and MDCT Algorithms-A Matrix Approach" IEEE TRANSACTIONS ON SIGNAL PROCESSING, IEEE SERVICE CENTER, NEW YORK, NY, US, vol. 51, no. 1, 1 January 2003 (2003-01-01), pages 221-229, XP011080318 ISSN: 1053-587X * page 221, right-hand column, line 37 - page 227, right-hand column, line 6; figures 1,3,5 * | 1-14 | INV. G10L19/02 G06F17/14 |
| X | BRITANAK V ET AL: "A new fast algorithm for the unified forward and inverse MDCT/MDST computation" SIGNAL PROCESSING, ELSEVIER SCIENCE PUBLISHERS B.V. AMSTERDAM, NL, vol. 82, no. 3, 1 March 2002 (2002-03-01), pages 433-459, XP004347321 ISSN: 0165-1684 * page 436, line 10 - page 445, line 11 * | 1-6,10, 12,14 | |
| D,A | SZU-WEI LEE: "Improved Algorithm for Efficient Computation of the Forward and Backward MDCT in MPEG Audio Coder" IEEE TRANSACTIONS ON CIRCUITS AND SYSTEMS II: EXPRESS BRIEFS, IEEE SERVICE CENTER, NEW YORK, NY, US, vol. 48, no. 10, 1 October 2001 (2001-10-01), XP011013502 ISSN: 1057-7130 * page 991, right-hand column, line 7 - page 992, left-hand column, line 25 * | 1-14 | TECHNICAL FIELDS SEARCHED (IPC) G10L G06F |

The present search report has been drawn up for all claims

| Place of search | Date of completion of the search | Examiner |
|---|---|---|
| Munich | 3 April 2009 | Dobler, Ervin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 224 431 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. Britanak ; K. R. Rao.** An efficient implementation of the forward and inverse MDCT in MPEG Audio Coding. *IEEE Signal Processing Letters,* February 2001, vol. 8 (2), 48-51
- **V. Britanak ; K. R. Rao.** A new fast algorithm for the unified forward and inverse MDCT/MDST computation. *Signal Processing Letters,* 2002, vol. 82, 433-459
- **S.-W. Lee.** Improved algorithm for efficient computation of the forward and backward MDCT in MPEG audio coder. *IEEE Transactions on Circuits and Systems-II: Analog and Digital Signal Processing,* October 2001, vol. 48 (10), 990-994
- **S.-W. Lee.** Improved algorithm for efficient computation of the forward and backward MDCT in MPEG audio coder. *IEEE Transactions on Circuits and Systems-II: Analog and Digital Signal Processing,* October 2000, vol. 48 (10), 990-994